(19) Europäisches Patentamt
European Patent Office
Office européen des brevets

(11) EP 1 153 938 A1

(12) **EUROPEAN PATENT APPLICATION**
published in accordance with Art. 158(3) EPC

(43) Date of publication:
**14.11.2001 Bulletin 2001/46**

(21) Application number: **00962839.7**

(22) Date of filing: **25.09.2000**

(51) Int Cl.[7]: **C08F 4/64**, C08F 10/00

(86) International application number:
**PCT/JP00/06591**

(87) International publication number:
**WO 01/23436 (05.04.2001 Gazette 2001/14)**

(84) Designated Contracting States:
**AT BE CH CY DE DK ES FI FR GB GR IE IT LI LU MC NL PT SE**

(30) Priority: **29.09.1999 JP 27637299**

(71) Applicant: **Sumitomo Chemical Company, Limited**
**Chuo-ku Osaka 541-8550 (JP)**

(72) Inventors:
- **FUJITA, Masayuki**
**Ichihara-shi, Chiba 299-0125 (JP)**
- **OGANE, Takuya**
**Sodegaura-shi, Chiba 299-0261 (JP)**
- **SEKI, Yoshinori**
**Ichihara-shi, Chiba 299-0125 (JP)**
- **FUJIWARA, Yasuki**
**Ichikawa-shi, Chiba 272-0824 (JP)**
- **YADA, Kenichiro**
**Ichihara-shi, Chiba 299-0125 (JP)**
- **TASAKA, Masatada**
**Ichihara-shi, Chiba 299-0125 (JP)**

(74) Representative: **VOSSIUS & PARTNER**
**Siebertstrasse 4**
**81675 München (DE)**

(54) **CATALYST FOR STEREOREGULAR POLYMERIZATION OF ALPHA-OLEFIN AND PROCESS FOR PRODUCING STEREOREGULAR ALPHA-OLEFIN POLYMER**

(57) A catalyst for stereoregular polymerization of $\alpha$-olefins obtained by a process comprising contacting modified particles (A) obtained by contacting dried particles (a) with an organometallic compound (b), then with a compound (c) having a functional group containing an active hydrogen or non-proton donative Lewis basic functional group, and an electron withdrawing group, with a transition metal compound (B) having an $\alpha$-olefin stereoregular polymerization ability and an organometallic compound (C), and a process for producing a stereoregular $\alpha$-olefin polymer which comprises polymerizing $\alpha$-olefin with said catalyst.

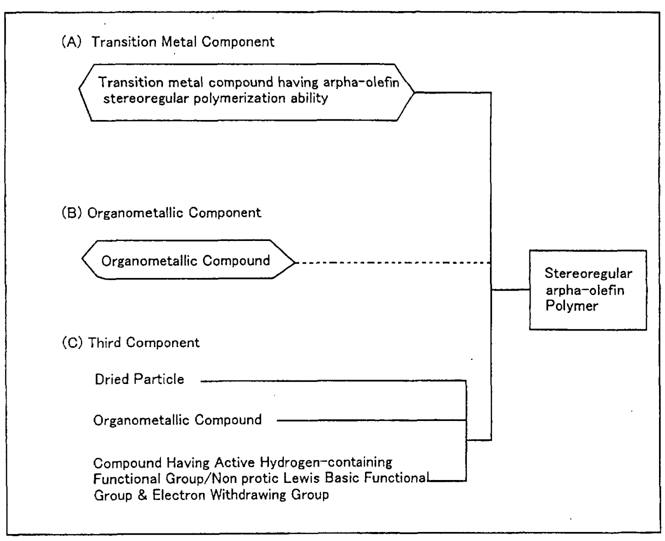


Fig 1

EP 1 153 938 A1

## Description

## TECHNICAL FIELD

The present invention relate to a process for producing a stereoregular α-olefin polymer. More particularly, the present invention relates to a catalyst for stereoregular polymerization of á-olefins, and a process for producing a stereoregular α-olefin polymer having a uniform polymer particle size with the catalyst for stereoregular polymerization of á-olefins.

## BACKGROUND ART

Stereoregular α-olefin polymers have been produced mainly using a multi-site catalyst such as a solid catalyst of conventional type, or the like, and recently, it is known that a stereoregular α-olefin polymer can be produced also by using a single-site catalyst obtained by using a metallocene catalyst having a specific structure, or the like.

For example, there are known examples for producing a highly stereoregular isotactic propylene polymer using a metallocene complex in which two mono- to tri-substituted $\eta^5$-cyclopentadienyl groups (Japanese Patent Nos. 2587251, 2627669, and 2668732) are bridged, and the like. There is also a report (J. Am. Chem. Soc., 1988, 110, 6255) disclosing production of syndiotactic propylene polymer by using isopropylidene(cyclopentadienyl)(fluorenyl) zirconium dichloride which is a metallocene complex of Cs symmetry and an aluminumoxy compound. Further, JP-A-9-510745 discloses a process for producing a stereo block polypropylene having an isotactic segment and atactic segment in one molecular chain using (2-phenylindenyl)zirconium dichloride and methylaluminoxane.

However, since these publicly-known single-site catalysts are soluble in the reaction system, there were problems that, when they are used in polymerizations (for example, slurry polymerization, gas phase polymerization, bulk polymerization and the like) accompanying formation of α-olefin polymer particles, the produced α-olefin polymer forms agglomerates which can not be removed, and in a continuous polymerization process, the catalyst scatters together with fine particles of the α-olefin polymer and may cause growth of a polymer in piping in the subsequent process.

Further, in the known method of using a single-site catalyst, the process for producing an α-olefin polymer was not admitted as sufficiently efficient.

Further, the stereoregularity of a stereoregular α - olefin polymer obtained by using these known single-site catalysts is not admitted as sufficiently high, and particularly, the stereoregularity of a stereo block polypropylene obtained by the above-mentioned method has an isotactic pentad fraction in the range from 6 to 33%, and development of a method of obtaining a stereo block polypropylene having higher isotactic pentad fraction and high rigidity has been desired.

## DISCLOSURE OF THE INVENTION

An object of the present invention is to provide a single-site catalyst for stereoregular polymerization of α-olefins, which gives a polymer having a uniform polymer particle size when the single-site catalyst is applied to a polymerization accompanying formation of α-olefin polymer particles. (for example, slurry polymerization, gas phase polymerization, bulk polymerization or the like), and a process for producing a stereoregular α-olefin polymer which gives a polymer having uniform polymer particle size when applied to a polymerization accompanying formation of α-olefin polymer particles (for example, slurry polymerization, gas phase polymerization, bulk polymerization or the like), using said catalyst.

Another object of the present invention is to provide a more efficient process for producing a stereoregular α - olefin polymer using a single-site catalyst.

Still another object of the present invention is to provide a process for producing an isotactic α-olefin polymer having more improved stereoregularity using a single-site catalyst.

Further another object of the present invention is to provide a catalyst for polymerization of olefins, which can produce a stereo block polypropylene having higher isotactic pentad fraction, and a process for producing an olefin polymer (particularly, a stereo block poly(α-olefin)) using said catalyst.

Other objects and advantages of the present invention will be become apparent from the following descriptions.

The present invention relates to a catalyst for stereoregular polymerization of á-olefins obtained by contacting modified particles(A) prepared by contacting (a) dried particles with an organometallic compound(b), then, with a compound (c) having a functional group having active hydrogen or a non-proton donative Lewis basic functional group, and an electron withdrawing group, with a transition metal compound (B) having a stereoregular polymerization activity of α -olefins, or further with an organometallic compound (C), and to a process for producing a stereoregular α-olefin polymer with the catalyst.

Further, the present invention relates to a process for producing a stereoregular $\alpha$-olefin polymer comprising contacting the above-mentioned modified particles (A) with an $\alpha$-olefin, then, contacting the resulted contacted product with a transition metal compound (B) having a stereoregular polymerization activity of an $\alpha$-olefin and an organometallic compound(C), and polymerizing an $\alpha$-olefin. By this, a more effective production process is provided.
Still further, the present invention relates to a catalyst for stereoregular polymerization of á-olefins obtained by contacting the modified catalyst (A) with a transition metal compound (B) of the following general formula (I), or further with an organometallic compound (C), and to a process for producing a stereoregular $\alpha$-olefin polymer with the catalyst for stereoregular polymerization of á-olefins. By this, a process for producing an isotactic $\alpha$-olefin polymer having more improved stereoregularity is provided.

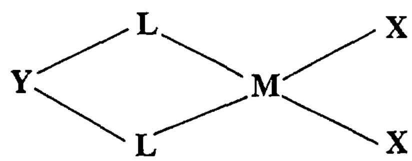

(I)

(in the formula, M represents a transition metal atom of group IV in the periodic table of element, L represents a substituted $\eta^5$-cyclopentadienyl group, $\eta^5$-indenyl group or substituted $\eta^5$-indenyl group, and two Ls may be the same or different. Y represents a bridging group linking two Ls, and each of two Xs independently represents a hydrogen atom, halogen atom, alkyl group, aralkyl group, aryl group, substituted silyl group, alkoxy group, aralkyloxy group, aryloxy group or heterocyclic group.).
Further, the present invention relates to a catalyst for stereoregular polymerization of á-olefins obtained by contacting the modified particles (A) with a transition metal compound (B) having the following general formula (II), and to a process for producing a stereo block poly($\alpha$-olefin) comprising polymerizing an $\alpha$-olefin with the catalyst. By this, there is provided a process for producing an olefin polymer using an olefin polymerization catalyst, which can produce a stereo block polypropylene having higher isotactic pentad fraction.

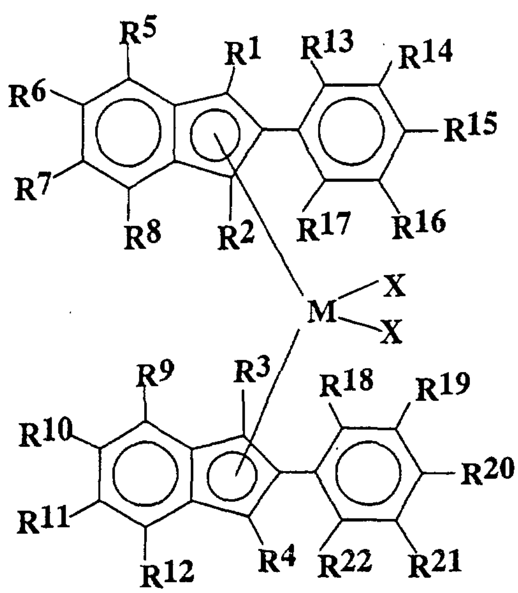

(II)

(in the formula, each of $R^1$ to $R^{22}$ independently represents a hydrogen atom, halogen atom, alkyl group, aryl group, aralkyl group or substituted silyl group, and $R^1$ to $R^{22}$ may be the same or different each other, and any adjacent two moieties of $R^1$ to $R^{22}$ on the same ring may form a ring having 5 to 8 carbon atoms. M represents a transition metal atom of group IV in the periodic table of element, and X represents a hydrogen atom, halogen atom, alkyl group, aryl group, aralkyl group or alkoxy group, and two Xs may be the same or different.).

## BRIEF DESCRIPTION OF THE DRAWING

FIG.1 is a flow chart to aid the understanding of the present invention. The flow chart is a representative

example of the mode of operation of the present invention, and the present invention is not limited thereto.

## BEST MODE FOR PRACTICING THE INVENTION

The present invention is explained in detail below.

(a) Dried particles

The modified particles of the present invention are obtained by contacting dried particles(a) with an organometallic compound(b), and subsequently a compound(c) having a functional group containing active hydrogen or a non-proton donative Lewis basic functional group and an electron withdrawing group. The particles (a) used herein are dry and substantially contain no water, and substantially forms no aluminoxane by contact with trialkylaluminum.

As the particles(a), there are preferably used those which are generally used as a carrier. A porous substance having a uniform particle diameter is preferred and an inorganic substance or an organic polymer is preferably used.

As the particles (a), a geometric standard deviation based on volume of the particle size of the particles (a) is preferably 2.5 or less, more preferably 2.0 or less, further preferably 1.7 or less from the view point of particle size distribution of a polymer obtained.

Examples of the inorganic substance which can be used as the particles(a) in the present invention include inorganic oxides and magnesium compounds, and clays and clay minerals can also be used unless problem arises. These inorganic substances may be used in combination.

Specific examples of the inorganic oxide include $SiO_2$, $Al_2O_3$, MgO, $ZrO_2$, $TiO_2$, $B_2O_3$, CaO, ZnO, BaO, $ThO_2$ and mixtures thereof such as $SiO_2$-MgO, $SiO_2$-$Al_2O_3$, $SiO_2$-$TiO_2$, $SiO_2$-$V_2O_5$, $SiO_2$-$Cr_2O_3$, $SiO_2$-$TiO_2$-MgO, etc. Among these inorganic oxides, $SiO_2$ and/or $Al_2O_3$ are preferred. The above inorganic oxide may contain a small amount of carbonate, sulfate, nitrate and oxide components, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, $Li_2O$, etc.

Examples of the magnesium compound include magnesium halides such as magnesium chloride, magnesium bromide, magnesium iodide, magnesium fluoride and the like; alkoxymagnesium halides such as magnesium methoxychloride, magnesium ethoxychloride, magnesium isopropoxychloride, magnesium butoxychloride, magnesium octoxychloride and the like; aryloxymagnesium halides such as magnesium phenoxychloride, magnesium methylphenoxychloride and the like; alkoxymagnesiums such as ethoxymagnesium, isopropoxymagnesium, butoxymagnesium, n-octoxymagnesium, 2-ethylhexoxymagnesium and the like; allyloxymagnesiums such as phenoxymagnesium, dimethylphenoxymagnesium and the like; magnesium carboxylates such as magnesium laurate, magnesium stearate and the like.

Among them, magnesium halides or alkoxymagnesiums are preferred, and magnesium chloride or butoxymagnesium is more preferred.

Examples of the clay or clay mineral include kaolin, bentonite, Kibushi clay, gaerome clay, allophane, hisingerite, pyrophylite, talc, a mica group, a montmorillinite group, vermiculite, a chlorite group, palygorskite, kaolinite, nacrite, dickite, halloycite and the like. Among them, smectite, montmorillinite, hectorite, raponite and saponite are preferred, and montmorillinite and hectorite are more preferred.

It is necessary that these inorganic substances are dried to substantially remove water, and those dried by a heat treatment are preferred. The heat treatment is normally carried out by heating a polymer in which moisture can not be visually confirmed at the temperature of 100 to 1500°C, preferably 100 to 1000°C, and more preferably 200 to 800°C. The heating time is not particularly limited, but preferably 10 minutes to about 50 hours, more preferably 1 hour to about 30 hours. Further, during heating, there can be used a method of passing a dried inert gas (e.g. nitrogen, argon) at a fixed flow rate, or a method of evacuating, but the method is not limited.

The average particle diameter of the inorganic substance is preferably from 5 to 1000 μm, more preferably from 10 to 500 μm, and most preferably from 10 to 100 μm. The micro pore volume is preferably not less than 0.1 ml/g, and more preferably 0.3 to 10ml/g. The specific surface area is preferably from 10 to 1000 $m^2$/g, and more preferably from 100 to 500 $m^2$/g.

As the particles(a) in the present invention, any organic polymer may be used and a mixture of plural kinds of organic polymer may also be used. As the organic polymer, an organic polymer having a functional group capable of reacting with the organometallic compound(b) is preferred. Examples of the functional group include functional group containing active hydrogen and a non-proton donative Lewis basic functional group. As the organic polymer which can be used as the particles(a), a polymer having a functional group containing active hydrogen or a non-proton donative Lewis basic functional group is preferred.

The functional group containing active hydrogen may be any one containing an active hydrogen, and is not specifically limited. Specific examples thereof include a primary amino group, secondary amino group, imino group, amide group, hydrazide group, amidino group, hydroxy group, hydroperoxy group, carboxyl group, formyl group, carbamoyl group, sulfonic acid group, sulfinic acid group, sulfenic acid group, thiol group, thioformyl group, pyrrolyl group, imidazolyl group, piperidyl group, indazolyl group, carbazolyl group and the like. Among them, a primary amino group, secondary amino group, imino group, amide group, hydroxy group, formyl group, carboxyl group, sulfonic acid group or thiol group is preferred. A primary amino group, secondary amino group, imino group, amide group or hydroxy group is particularly preferred. These groups may be substituted with a halogen atom or a hydrocarbon group having 1 to 20 carbon atoms.

The non-proton donative Lewis basic functional group may be any functional group having a Lewis basic portion containing no active hydrogen atom, and is not specifically limited. Specific examples thereof include a pyridyl group, N-substituted imidazolyl group, N-substituted indazolyl group, nitrile group, azido group, N-substituted imino group, N,N-substituted amino group, N,N-substituted aminoxy group, N,N,N-substituted hydrazino group, nitroso group, nitro group, nitroxy group, furyl group, carbonyl group, thiocarbonyl group, alkoxy group, alkyloxycarbonyl group, N,N-substituted carbamoyl grop, thioalkoxy group, substituted sulfinyl group, substituted sulfonyl group, substituted sulfonic acid group and the like. A heterocyclic group is preferred, and an aromatic heterocyclic group having an oxygen atom and/or a nitrogen atom in the ring is more preferred. Among them, a pyridyl group, N-substituted imidazolyl group and N-substituted indazoyl groups are particularly preferred and a pyridyl group is most preferred. These groups may be substituted with a halogen atom or a hydrocarbon group having 1 to 20 carbon atoms.

The amount of the functional group containing active hydrogen or non-proton donative Lewis basic functional group is not specifically limited, but is preferably from 0.01 to 50 mmol/g, and more preferably from 0.1 to 20 mmol/g, in terms of a molar amount of the functional group per g of the organic polymer.

The organic polymer having said functional group can be obtained, for example, by polymerizing a monomer having a functional group containing active hydrogen or a non-proton donative Lewis basic functional group, or this monomer and another monomer. At this time, it is preferred to copolymerize the above monomers with a crosslinking polymerizable monomer having two or more polymerizable unsaturated bonds.

Examples of the monomer having a functional group containing active hydrogen or a non-proton donative Lewis basic functional group include the above monomer having a functional group containing active hydrogen, and a polymerizable unsaturated group or monomer having a functional group having a Lewis basic portion containing no active hydrogen, and a polymerizable unsaturated group.

Examples of the polymerizable unsaturated group include alkenyl groups such as a vinyl group, allyl group and the like; alkynyl groups such as an ethyne group and the like.

Examples of the monomer having a functional group containing active hydrogen and a polymerizable unsaturated group include a vinyl group-containing primary amine, a vinyl group-containing secondary amine, a vinyl group-containing amide compound and a vinyl group-containing hydroxy compound. Specific examples thereof include N-(1-ethenyl)amine, N-(2-propenyl)amine, N-(1-ethenyl)-N-methylamine, N-(2-propenyl)-N-methylamine, 1-ethenylamide, 2-propenylamide, N-methyl-(1-ethenyl)amide, N-methyl-(2-propenyl)amide, vinyl alcohol, 2-propen-1-ol, 3-buten-1-ol and the like.

Specific examples of the monomer having a functional group having a Lewis basic portion containing no active hydrogen, and a polymerizable unsaturated group include vinylpyridine, vinyl(N-substituted)imidazole and vinyl(N-substituted)indazole.

The other monomers having a polymerizable unsaturated group include ethylene, $\alpha$-olefin and the like, and specific examples thereof include ethylene, propylene, butene-1, hexene-1, 4-methyl-pentene-1, styrene and the like. Among them, ethylene or styrene is preferred. Two or more kinds of these monomers may be used.

Specific examples of the crosslinking polymerizable monomer having two or more polymerizable unsaturated groups include divinylbenzene and the like.

The average particle diameter of the organic polymer is preferably from 5 to 1000 μm, and more preferably from 10 to 500 μm. The pore volume is preferably not less than 0.1 ml/g, and more preferably 0.3 to 10ml/g. The specific surface area is preferably from 10 to 1000 $m^2$/g, and more preferably from 50 to 500 $m^2$/g.

It is necessary that these organic polymers are dried to substantially remove water, and those dried by a heat treatment are preferred. The heat treatment is normally carried out by heating a polymer in which moisture can not be visually confirmed at the temperature of 30 to 400°C, preferably 50 to 200°C, and more preferably 70 to 150°C. The heating time is not particularly limited, but preferably 30 minutes to about 50 hours, more preferably 1 hour to about 30 hours. Further, during heating, there can be used a method of passing a dried inert gas (e.g. nitrogen, argon) at a fixed flow rate, or a method of evacuating, but the method is not limited.

(b) Organometallic compound

The organometallic compound (b) used in the present invention is an organometallic compound represented by the following general formula (1):

$$R^a{}_nAX^1{}_{q-n} \quad (1)$$

(wherein A represents a metal atom of the 2nd, 12th or 13th Group of the Periodic Table of Element(IUPAC 1993); $R^a$ represents a hydrocarbon group having 1 to 20 carbon atoms or a hydrocarbonoxy group having 1 to 20 carbon atoms and a plurality of $R^a$ may be the same or different; $X^1$ represents a halogen atom or a hydrogen atom; n represents a number satisfying the expression $0 < n \leqq q$; and q is a valence number of the metal atom A.).

A in the general formula(1) above is a metal atom of the 2nd, 12th or 13th Group of the Periodic Table of Element(IUPAC 1993), and A preferably includes a boron atom, aluminum atom, magnesium atom, zinc atom. When A is a boron atom or aluminum atom, the valence number is 3 (q=3), and when A is magnesium atom or zinc atom, the valence number is 2(q=2).

When A is a boron atom, $R^1$ is preferably the hydrocarbon group described above, and specific examples of thereof include trialkylboranes such as trimethylborane, triethylborane, tripropylborane, tributylborane, triphenylborane and the like; dialkylhalideboranes such as dimethylchloroborane, diethylchloroborane, dipropylchloroborane, dibutylchloroborane, diphenylchloroborane and the like; dialkylhydrideborane such as dimethylhydridoborane, diethylhydridoborane, dipropyldihydridoborane, dibutylhydridoborane, diphenylhydridoborane and the like; alkyldihalideborane such as methyldichloroborane, ethyldichloroborane, propyldichloroborane, butyldichloroborane, phenyldichloroborane and the like.

When A is an aluminum atom, $R^1$ is preferably the hydrocarbon group described above, and specific examples of thereof include trialkylaluminums such as trimethylaluminum, triethylaluminum, tri-n-propylaluminum, triisopropylaluminum, tri-n-butylaluminum, triisobutylaluminum, tri-n-hexylaluminum and the like; dialkylaluminum halides such as dimethylaluminum chloride, diethylaluminum halide, di-n-propylaluminum chloride, diisopropylaluminum chloride, di-n-butylaluminum chloride, diisobutylaluminum chloride, di-n-hexylaluminum chloride and the like; alkylaluminum dihalides such as methylaluminum dichloride, ethylaluminum dichloride, n-propylaluminum dichloride, isopropylaluminum dichloride, n-butylaluminum dichloride, isobutylaluminum dichloride, n- hexylaluminum dichloride and the like; dialkylaluminumhydrides such as dimethylaluminumhydride, diethylaluminumhydrido, di-n-propylaluminumhydride, diisopropylaluminumhydride, di-n-butylaluminumhydride, diisobutylaluminumhydride, di-n-hexylaluminumhydride and the like.

Trialkylaluminums are preferred, and trimethylaluminum, triethylaluminum, triisobutylaluminum, tri-n-butylaluminum and tri-n-hexylaluminum are more preferred. Among them, trimethylaluminum, triethylaluminum and triisobutylaluminum are particularly preferred.

When A is a magnesium atom, $R^1$ is preferably the hydrocarbon group described above, and specific examples of thereof include diethylmagnesium, di-n-butylmagnesium and the like, and there is also included di-n-butoxymagnesium in which $R^1$ is the hydrocarbonoxy group described above. And, when A is a zinc atom, $R^1$ is preferably the hydrocarbon group described above, and specific examples of thereof include diethylzinc and the like.

The organometallic compound(b) is more preferably an organoaluminum compound and organoboron compound, and an organoaluminum compound is most preferred.

(c) Compound having a functional group containing active hydrogen, or anon-proton donative Lewis basic functional group, and an electron withdrawing group

The functional group containing active hydrogen or non-proton donative Lewis basic functional group of the compound(c) used in the present invention usually reacts with the organometallic compound.

The functional group containing active hydrogen and non-proton donative Lewis basic functional group are the same as those described herein-above.

The compound(c) has an electron withdrawing group, but a substituent constant σ of Hammett's rule can be used as an index of the electron withdrawing group. A functional group wherein the substituent constant σ of Hammett's rule is positive corresponds to the electron withdrawing group.

Specific examples of the electron withdrawing group include a fluorine atom, chlorine atom, bromine atom, iodine atom, cyano group, nitro group, phenyl group, acetyl group, carbonyl group, thionyl group, sulfone group, carboxyl group and the like.

In the compound(c), a functional group containing active hydrogen and a non-proton donative Lewis basic functional group may be the same. In this case, the compound may have only one of the group.

The compound(c) is preferably a compound having a functional group containing active hydrogen and an electron withdrawing group, and examples thereof include amines, phosphines, alcohols, phenols, thiols, thiophenols, carboxylic acids and sulfonic acids and the like.

The compound (c) is more preferably a compound represented by the following general formula (2):

$$R^b{}_m ZH_{z-m} \qquad (2)$$

(wherein $R^b$ represents an electron withdrawing group or a group containing an electron withdrawing group; Z represents an atom of the 15th or 16th Group of the Periodic Table; and z represents a valence of Z and is 2 or 3, provided m is 1 when z is 2 and m is 1 or 2 when z is 3).

Examples of the group containing an electron withdrawing group in $R^b$ of the general formula (2) include a halogenated alkyl group, halogenated aryl group, cyanated aryl group, nitrated aryl group, ester group and the like.

Specific examples of the halogenated alkyl group include fluoromethyl group, chloromethyl group, bromomethyl group, iodomethyl group, difluoromethyl group, dichloromethyl group, dibromomethyl group, diiodomethyl group, trifluoromethyl group, trichloromethyl group, tribromomethyl group, triiodomethyl group, 2,2,2-trifluoroethyl group, 2,2,2-trichloroethyl group, 2,2,2-tribromoethyl group, 2,2,2-triiodoethyl group, 2,2,3,3,3-pentafluoropropyl group, 2,2,3,3,3-pentachloropropyl group, 2,2,3,3,3-pentabromopropyl group, 2,2,3,3,3-pentaiodopropyl group, 2,2,2-trifluoro-1-trifluoromethylethyl group, 2,2,2-trichloro-1-trichloromethylethyl group, 2,2,2-tribromo-1-tribromomethylethyl group, 2,2,2-triiodo-1-triiodomethylethyl group, 1,1,1,3,3,3-hexafluoro-2-trifluoromethylpropyl group, 1,1,3,3,3-hexachloro-2-trichloromethylpropyl group, 1,1,3,3,3-hexabromo-2-tribromomethylpropyl group, 1,1,3,3,3-hexaiodo-2-triiodomethylpropyl group and the like.

Specific examples of the halogenated aryl group include 2-fluorophenyl group, 3-fluorophenyl group, 4-fluorophenyl group, 2-chlorophenyl group, 3-chlorophenyl group, 4-chlorophenyl group, 2-bromophenyl group, 3-bromophenyl group, 4-bromophenyl group, 2-iodophenyl group, 3-iodophenyl group, 4-iodophenyl group, 2,6-difluorophenyl group, 3,5-difluorophenyl group, 2,6-dichlorophenyl group, 3,5-dichlorophenyl group, 2,6-dibromophenyl group, 3,5-dibromophenyl group, 2,6-diiodophenyl group, 3,5-diiodophenyl group, 2,4,6-trifluorophenyl group, 2,4,6-trichlorophenyl group, 2,4,6-tribromophenyl group, 2,4,6-triiodophenyl group, pentafluorophenyl group, pentachlorophenyl group, pentabromophenyl group, pentaiodophenyl group, 2-(trifluoromethyl)phenyl group, 3-(trifluoromethyl)phenyl group, 4-(trifluoromethyl)phenyl group, 2,6-di(trifluoromethyl)phenyl group, 3,5-di(trifluoromethyl)phenyl group, 2,4,6-tri(trifluoromethyl)phenyl group and the like.

Specific examples of the cyanated aryl group include 2-cyanophenyl group, 3-cyanophenyl group, 4-cyanophenyl group and the like.

Specific examples of the nitrated aryl group include 2-nitrophenyl group, 3-nitrophenyl group, 4-nitrophenyl group and the like.

Specific examples of the ester group include methoxycarbonyl group, ethoxycarbonyl group, n-propyloxycarbonyl group, isopropyloxycarbonyl group, phenoxycarbonyl group, trifluoromethyloxycarbonyl group, pentafluorophenyloxycarbonyl group and the like.

$R^b$ of the general formula (2) is preferably a halogenated alkyl or halogenated aryl group, more preferably a fluoromethyl group, difluoromethyl group, trifluoromethyl group, 2,2,2-trifluoromethyl group, 2,2,3,3,3-pentafluoromethyl group, 2,2,2-trifluoro-1-trifluoromethylethyl group, 1,1,1,3,3,3-hexafluoro-2-trifluoromethylpropyl group, 4-fluorophenyl group, 2,6-difluorophenyl group, 3,5-difluorophenyl group, 2,4,6-trifluorophenyl group or pentafluorophenyl group, more preferably a trifluoromethyl group, 2,2,2-trifluoro-1-trifluoromethylpropyl group, 1,1,1,3,3,3-hexafluoro-2-trifluoromethylpropyl group or pentafluorophenyl group.

Z in the general formula (2) represents an atom of the 15th or 16th Group of the Periodic Table, and H represents a hydrogen atom. Specific examples of Z include a nitrogen atom, phosphorous atom, oxygen atom, sulfur atom and the like. Among them, a nitrogen atom or oxygen atom is preferred and an oxygen atom is more preferred.

z represents a valence of Z. For example, z is 3 when Z is a nitrogen atom or a phosphorous atom, whereas, z is 2 when Z is am oxygen atom or a sulfur atom. m is 1 when z is 2, whereas, m is 1 or 2 when z is 3.

Specific examples of the amines described as for the compound(c) include di(fluoromethyl)amine, di(chloromethyl)amine, di(bromomethyl)amine, di(iodomethyl)amine, di(difluoromethyl)amine, di(dichloromethyl)amine, di(dibromomethyl)amine, di(diiodomethyl)amine, di(trifluoromethyl)amine, di(trichloromethyl)amine, di(tribromomethyl)amine, di(triiodomethyl)amine, di(2,2,2-trifluoroethyl)amine, di(2,2,2-trichloroethyl)amine, di(2,2,2-tribromoethyl)amine, di(2,2,2-triiodoethyl)amine, di(2,2,3,3,3-pentafluoropropyl)amine, di(2,2,3,3,3-pentachloropropyl)amine, di(2,2,3,3,3-pentabromopropyl)amine, di(2,2,3,3,3-pentaiodopropyl)amine, di(2,2,2-trifluoro-1-trifluoromethylethyl)amine, di(2,2,2-trichloro-1-trichloromethylethyl)amine, di(2,2,2-tribromo-1-tribromomethylethyl)amine, di(2,2,2-triiodo-1-triiodomethylethyl)amine, di(1,1,1,3,3,3-hexafluoro-2-trifluoromethylpropyl)amine, di(1,1,1,3,3,3-hexachloro-2-trichloromethylpropyl)amine, di(1,1,1,3,3,3-hexabromo-2-tribromomethylpropyl)amine, di(1,1,1,3,3,3-hexaiodo-2-triiodomethylpropyl)amine, di(2-fluorophenyl)amine, di(3-fluorophenyl)amine, di(4-fluorophenyl)amine, di(2-chlorophenyl)amine, di(3-chlorophenyl)amine, di(4-chlorophenyl)amine, di(2-bromophenyl)amine, di(3-bromophenyl)amine, di(4-bromophenyl)amine, di(2-iodophenyl)amine, di(3-iodophenyl)amine, di(4-iodophenyl)amine, di(2,6-difluorophenyl)amine, di(3,5-difluorophenyl)amine, di(2,6-difluorophenyl)amine, di(3,5-difluorophenyl)amine, di(2,6-dichlorophenyl)amine, di(3,5-dichlorophenyl)amine, di(2,6-dibromophenyl)amine, di(3,5-dibromophenyl)amine, di(2,6-diiodophenyl)amine, di(3,5-diiodophenyl)amine, di(2,4,6-trifluorophenyl)amine, di(2,4,6-trichlorophenyl)amine, di (2,4,6-tribromophenyl)amine, di(2,4,6-triiodophenyl)amine, di(pentafluorophenyl)amine, di(pentachlorophenyl)amine, di(pentabromophenyl)amine, di(pentaiodophenyl)amine, di(2-(trifluoromethyl) phenyl)amine, di(3-(trifluoromethyl) phenyl)amine, di(4-(trifluoromethyl)phenyl)amine, di(2,6-di(trifluoromethyl)phenyl)amine, di(3,5-di(trifluoromethyl) phenyl)amine, di(2,4,6-tri(trifluoromethyl)phenyl)amine, di(2-cyanophenyl)amine, di(3-cyanophenyl)amine, di(4-cyanophenyl)amine, di(2-nitrophenyl)amine, di(3-nitrophenyl)amine,di(4-nitrophenyl)amine and the like. There can also be exemplified phosphine compounds wherein the nitrogen atom is replaced with a phosphorous atom. Those phosphine compounds are compounds represented by replacing amine of the above specific examples with phosphine.

Specific examples of the alcohols described as for the compound(c) include fluoromethanol, chloromethanol, bromomethanol, iodomethanol, difluoromethanol, dichloromethanol, dibromomethanol, diiodomethanol, trifluoromethanol, trichloromethanol, tribromomethanol, triiodomethanol, 2,2,2-trifluoroethanol, 2,2,2-trichloroethanol, 2,2,2-tribromoethanol, 2,2,2-triiodoethanol, 2,2,3,3,3-pentafluoropropanol, 2,2,3,3,3-pentachloropropanol, 2,2,3,3,3-pentabromopropanol, 2,2,3,3,3-pentaiodopropanol, 2,2,2-trifluoro-1-trifluoromethylethanol, 2,2,2-trichloro-1-trichloromethylethanol, 2,2,2-tribromo-1-tribromomethylethanol, 2,2,2-triiodo-1-triiodomethylethanol, 1,1,1,3,3,3-hexafluoro-2-trifluoromethylpropanol, 1,1,1,3,3,3-hexachloro-2-trichloromethylpropanol, 1,1,1,3,3,3-hexabromo-2-tribromomethylpropanol, 1,1,1,3,3,3-hexaiodo-2-triiodomethylpropanol and the like. There can also be exemplified thiol compounds wherein the oxygen atom is replaced with a sulfur atom. Those thiol compounds are compounds represented by replacing methanol of the above specific examples with methanethiol, replacing ethanol with ethanethiol and replacing propanol with propanethiol, respectively, and the like.

Specific examples of the phenols described as for the compound(c) include 2-fluorophenol, 3-fluorophenol, 4-fluorophenol, 2-chlorophenol, 3-chlorophenol, 4-chlorophenol, 2-bromophenol,3-bromophenol, 4-bromophenol, 2-iodophenol, 3-iodophenol, 4-iodophenol, 2,6-difluorophenol, 3,5-difluorophenol, 2,6-dichlorophenol, 3,5-dichlorophenol, 2,6-dibromophenol, 3,5-dibromophenol, 2,6-diiodophenol, 3,6-diiodophenol, 2,4,6-trifluorophenol, 2,4,6-trichlorophenol, 2,4,6-tribromophenol, 2,4,6-triiodophenol, pentachlorophenol, pentafluorophenol, pentaiodophenol, pentafluorophenol, 2-(trifluoromethyl)phenol, 3-(trifluoromethyl)phenol, 4-(trifluoromethyl)phenol, 2,6-di(trifluoromethyl)phenol, 3,5-di(trifluoromethyl)phenol, 2,4,6-tri(trifluoromethyl)phenol, 2-cyanophenol, 3-cyanophenol,4-cyanophenol,2-nitrophenol,3-nitrophenol, 4-nitrophenol and the like. There can also be exemplified thiophenol compounds wherein the oxygen atom is substituted with a sulfur atom. Those thiophenol compounds are compounds represented by substituting phenol of the above specific examples with thiophenol.

Specific examples of the carboxylic acids described as for the compound(c) include 2-fluorobenzoic acid, 3-fluorobenzoic acid, 4-fluorobenzoic acid, 2,3-difluorobenzoic acid, 2,4-difluorobenzoic acid, 2,5-difluorobenzoic acid, 2,6-difluorobenzoic acid, 2,3,4-trifluorobenzoic acid, 2,3,5-trifluorobenzoic acid, 2,3,6-trifluorobenzoic acid, 2,4,5-trifluorobenzoic acid, 2,4,6-trifluorobenzoic acid, 2,3,4,5-tetrafluorobenzoic acid, 2,3,4,6-tetrafluorobenzoic acid, pentafluorobenzoic acid, fluoroacetic acid, difluoroacetic acid, trifluoroacetic acid, pentafluoroethylcarboxylic acid, heptafluoropropylcarboxylic acid, 1,1,1,3,3,3-hexafluoro-2-propylcarboxylic acid and the like.

Specific examples of the sulfonic acids as for the compound(c) include fluoromethanesulfonic acid, difluoromethanesulfonic acid, trifluoromethanesulfonic acid, pentafluoroethanesulfonic acid, heptafluoropropanesulfonic acid, 1,1,1,3,3,3-hexafluoro-2-propanesulfonic acid and the like.

Preferred examples of the amines as for the compound(c) include di(trifluoromethyl)amine, di(2,2,2-trifluoroethyl)amine, di(2,2,3,3,3-pentafluoropropyl)amine, di(2,2,2-trifluoro-1-trifluoromethylethyl)amine, di(1,1,1,3,3,3-hexafluoro-2-trifluoromethylpropyl)amine and di(pentafluorophenyl)amine; preferred examples of the alcohols include trifluoromethano1,2,2,2-trifluoroethanol, 2,2,3,3,3-pentafluoropropanol, 2,2,2-trifluoro-1-trifluoromethylethanol and 1,1,1,3,3,3-hexafluoro-2-trifluoromethylpropanol; preferred examples of the phenols include 2-fluorophenol, 3-fluorophenol, 4-fluorophenol, 2,6-difluorophenol, 3,5-difluorophenol, 2,4,6-trifluorophenol, pentafluorophenol, 2-(trifluoromethyl)phenol, 3-(trifluoromethyl)phenol, 4-(trifluoromethyl)phenol, 2,6-di(trifluoromethyl)phenol, 3,5-di(trifluoromethyl)phenol and 2,4,6-tri(trifluoromethyl)phenol; preferred examples of the carboxylic acids include pentafluorobenzoic acid and trifluoroacetic acid; and preferred examples of the sulfonic acids include trifluoromethanesulfonic acid.

More preferred examples of the compound(c) include di(trifluoromethyl)amine, di(pentafluorophenyl)amine, trifluoromethanol, 2,2,2-trifluoro-1-trifluoroethanol, 1,1,1,3,3,3-hexafluoro-2-trifluoromethylpropanol, 4-fluorophenol, 2,6-difluorophenol, 2,4,6-trifluorophenol, pentafluorophenol, 4-(trifluoromethyl)phenol, 2,6-di(trifluoromethyl)phenol and 2,4,6-tri(trifluoromethyl)phenol, more preferably pentafluorophenol or 1,1,1,3,3,3-hexafluoro-2-trifluoromethylpropanol (common use name: perfluoro-tert-butanol).

(A) Modified particles

The modified particles is obtained by contacting dried particles(a) with an organometallic compound(b), and then a compound(c) having a functional group containing active hydrogen or a non-proton donative Lewis basic functional group and an electron withdrawing group.

It is preferable that the contact treatment of (a) with (b), and subsequent contact treatment with (c) are carried out under an inert gas atmosphere.

The treating temperature is normally within the range from -80 to 200°C, preferably from -20 to 150°C, and more preferably from 0 to 100°C. The treating time is not limited and is usually from 1 minute to 48 hours, and preferably from 10 minutes to 24 hours. It is preferred to use a solvent and the solvent used is preferably an aliphatic or aromatic hydrocarbon solvent which is inert to (a), (b) and (c). Examples of the aliphatic hydrocarbon solvent include butane, pentane, hexane, heptane, octane and the like; and examples of the aromatic hydrocarbon solvent include benzene, toluene, xylene and the like. There can also be used those obtained by optionally mixing these hydrocarbon solvents.

The method of contacting (a) with (b), and the method of the following contacting with (c) may be the same or different.

The contact treated particles in each contacting step may be not subjected to isolation operation, but it is preferable to isolate the treated particles after contact in each of the contact steps.

As examples of the isolating method, there can be included a method of decantation of the supernatant of the reaction solution, method of washing the treated particles with an inert solvent after filtration, method of washing the treated particles with an inert solvent after filtration and drying them under reduced pressure or an inert gas flow, method of distilling off the solvent of the reaction solution under reduced pressure or an inert gas flow, and the like. Alternatively, when the isolation of the treated particles obtained as described above is not conducted, the particles obtained in the reaction liquid may be used in the polymerization in a state of being suspended in the inert solvent.

Regarding the amount of (b) to (a) in the preparation of the modified particles of the present invention, as the metal atom of the organometallic compound(b) contained in the particles obtained by contacting (a) with (b) is preferably not less than 0.1 mmol, and more preferably 0.5 to 20 mmol, in terms of the number of mol of the metal atom contained in 1 g of particles in the dry state, it may be properly determined so as to become within the range. Regarding the amount of (c), the molar ratio of the compound(c) having a functional group containing active hydrogen or a non-proton donative Lewis basic functional group and an electron withdrawing group to the organometallic compound (b) contained in 1 g of particles in the dry state, i.e. (c)/(b), is preferably from 0.01 to 100, more preferably from 0.05 to 5, and most preferably from 0.1 to 2.

(B) Transition metal compound having stereoregular α -olefin polymerization ability

The transition metal compound used in the catalyst for polymerization of α-olefins of the present invention is not particularly restricted so far as it is a transition metal compound which forms a single-site catalyst which can produce a stereoregular α-olefin polymer such as an isotactic propylene polymer and a syndiotactic propylene polymer, and preferable are transition metal compounds having a transition metal atom of groups IV to X of the periodic table of element (IUPAC1985) and lanthanoid series. Examples of such a transition metal atom include a titanium atom, zirconium atom, hafnium atom, vanadium atom, niobium atom, tantalum atom, chromium atom, iron atom, ruthenium atom, cobalt atom, rhodium atom, nickel atom, palladium atom, samarium atom, ytterbium atom and the like, and a titanium atom, zirconium atom or hafnium atom is preferable.

As the preferable transition metal compound (B), transition metal compounds of the following general formula (I) or the following general formula (III) are listed.

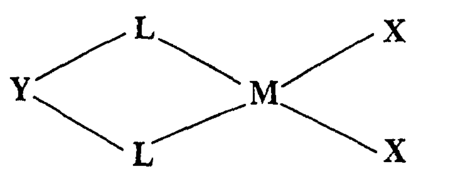

(I)

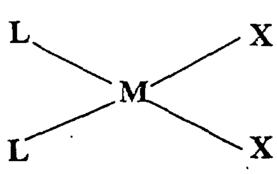

(III)

(in the formula, M represents a transition metal atom of group IV in the periodic table of element, L represents a substituted $\eta^5$-cyclopentadienyl group, $\eta^5$-indenyl group or substituted $\eta^5$-indenyl group, and two Ls may be the same

or different. Y represents a bridging group linking two Ls, and each or two Xs independently represents a hydrogen atom, halogen atom, alkyl group, aralkyl group, aryl group, substituted silyl group, alkoxy group, aralkyloxy group, aryloxy group or heterocyclic group.).

In the general formulas (I) and (III), A transition metal atom represented by M is the above-mentioned transition metal atom, and includes preferably a titanium atom, zirconium atom and hafnium atom, more preferably a titanium atom and zirconium atom. In the general formula (III) mentioned above, L is an $\eta^5$-substituted-cyclopentadienyl group, $\eta^5$-indenyl group or $\eta^5$-substituted-indenyl group, and two L's may be the same or different. Specific examples of the $\eta^5$-substituted-cyclopentadienyl group include an $\eta^5$-2-methylcyclopentadienyl group (herein-after, "$\eta^5$-" is sometimes omitted), 2-ethylcyclopentadienyl group, 2-n-propylcyclopentadienyl group, 2-isopropylcyclopentadienyl group, 2-n-butylcyclopentadienyl group, 2-isobutylcyclopentadienyl group, 2-tert-butylcyclopentadienyl group, 2-n-hexylcyclopentadienyl group, 3-methylcyclopentadienyl group, 3-ethylcyclopentadienyl group, 3-n-propylcyclopentadienyl group, 3-isopropylcyclopentadienyl group, 3-n-butylcyclopentadienyl group, 3-isobutylcyclopentadienyl group, 3-tert-butylcyclopentadienyl group, 3-n-hexylcyclopentadienyl group, 2,3-dimethylcyclopentadienyl group, 2,3-diethylcyclopentadienyl group, 2,3-di-n-propylcyclopentadienyl group, 2,3-diisopropylcyclopentadienyl group, 2,3-di-n-butylcyclopentadienyl group, 2,3-diisobutylcyclopentadienyl group, 2,3-di-tert-butylcyclopentadienyl group, 2,3-di-n-hexylcyclopentadienyl group, 2,4-dimethylcyclopentadienyl group, 2,4-diethylcyclopentadienyl group, 2,4-di-n-propylcyclopentadienyl group, 2,4-diisopropylcyclopentadienyl group, 2,4-di-n-butylcyclopentadienyl group, 2,4-diisobutylcyclopentadienyl group, 2,4-di-tert-butylcyclopentadienyl group, 2,4-di-n-hexylcyclopentadienyl group, 3,5-dimethylcyclopentadienyl group, 3,5-diethylcyclopentadienyl group, 3,5-di-n-propylcyclopentadienyl group, 3,5-diisopropylcyclopentadienyl group, 3,5-di-n-butylcyclopentadienyl group, 3,5-diisobutylcyclopentadienyl group, 3,5-di-tert-butylcyclopentadienyl group, 3,5-di-n-hexylcyclopentadienyl group, 2-ethyl-3-methylcyclopentadienyl group, 2-methyl-3-ethylcyclopentadienyl group, 2-methyl-3-n-propylcyclopentadienyl group, 2-methyl-3-isopropylcyclopentadienyl group, 2-ethyl-3-isopropylcyclopentadienyl group, 2-methyl-3-n-butylcyclopentadienyl group, 2-methyl-3-isobutylcyclopentadienyl group, 2-methyl-3-tert-butylcyclopentadienyl group, 2-methyl-3-n-hexylcyclopentadienyl group, 2-ethyl-4-methylcyclopentadienyl group, 2-methyl-4-ethylcyclopentadienyl group, 2-methyl-4-n-propylcyclopentadienyl group, 2-methyl-4-isopropylcyclopentadienyl group, 2-ethyl-4-isopropylcyclopentadienyl group, 2-methyl-4-n-butylcyclopentadienyl group, 2-methyl-4-isobutylcyclopentadienyl group, 2-methyl-4-tert-butylcyclopentadienyl group, 2-methyl-4-n-hexylcyclopentadienyl group, 3-ethyl-5-methylcyclopentadienyl group, 3-methyl-5-ethylcyclopentadienyl group, 3-methyl-5-n-propylcyclopentadienyl group, 3-methyl-5-isopropylcyclopentadienyl group, 3-ethyl-5-isopropylcyclopentadienyl group, 3-methyl-5-n-butylcyclopentadienyl group, 3-methyl-5-isobutylcyclopentadienyl group, 3-methyl-5-tert-butylcyclopentadienyl group, 3-methyl-5-n-hexylcyclopentadienyl group, 2,3,5-trimethylcyclopentadienyl group, 2,4,5-trimethylcyclopentadienyl group, 2-(2-furyl)-3,5-dimethylcyclopentadienyl group and 2-(2-furyl)-4,5-dimethylcyclopentadienyl group. As the $\eta^5$-indenyl group, $\eta^5$-methylindenyl group, $\eta^5$-dimethylindenyl group, $\eta^5$-n-propylindenyl group, $\eta^5$-isopropylindenyl group, $\eta^5$-n-butylindenyl group, $\eta^5$-tert-butylindenyl group, $\eta^5$-phenylindenyl group, $\eta^5$-methylphenylindenyl group, $\eta^5$-naphtylindenyl group, $\eta^5$-trimethylsilylindenyl group, $\eta^5$-tetrahydroindenyl group, and the like are listed.

In the above-mentioned general formula (I), Y represents a bridging group linking two Ls. As the bridging group, divalent bridging groups containing an atom of group XIV of the periodic table of element (IUPAC, inorganic chemical nomenclature, revised edition, 1989) and the like are listed, and preferable are divalent bridging groups containing a carbon atom, silicon atom, germanium atom or tin atom. More preferable are divalent bridging groups in which the atom to be connected with two Ls is a carbon atom, silicon atom, germanium atom and/or tin atom, and further preferable are divalent bridging groups in which the atom to be connected with two Ls is a carbon atom, silicon atom, germanium atom and/or tin atom, and the minimum number of atoms connected between two Ls is 3 or less (including cases in which atoms connected with two Ls are composed of a single kind of atom.). Specific examples thereof include a methylene group, ethylene group, propylene group, dimethylmethylene group (isopropylidene group), diphenylmethylene group, tetramethylethylene group, silylene group, dimethylsilylene group, diethylsilylene group, diphenylsilylene group, tetramethyldisilylene group, dimethoxysilylene group and the like, and particularly preferable are a methylene group, ethylene group, dimethylmethylene group (isopropylidene group), dimethylsilylene group, diethylsilylene group or diphenylsilylene group.

In the above-mentioned general formula, each of two Xs independently represents a hydrogen atom, halogen atom, alkyl group, aralkyl group, aryl group, substituted silyl group, alkoxy group, aralkyloxy group, aryloxy group or heterocyclic group.

Herein, as the halogen atom, a fluorine atom, chlorine atom, bromine atom and iodine atom are illustrated. A chlorine atom or bromine atom is preferable and a chlorine atom is more preferable.

As the alkyl group in the substituent, $X^1$, $X^1$, $R^1$, $R^2$, $R^3$, $R^4$, $R^5$ or $R^6$, an alkyl group having 1 to 20 carbon atoms is preferred, and examples include amethyl group, ethyl group, n-propyl group, isopropyl group, n-butyl group, sec-butyl group, tert-butyl group, isobutyl group, n-pentyl group, neopentyl group, isoamyl group, n-hexyl group, n-octyl group, n-decyl group, n-dodecyl group, n-pentadecyl group, n-eicosyl group and the like, and a methyl group,

ethyl group, isopropyl group, tert-butyl group or isobutyl group or isoamyl group is more preferable.

All of these alkyl groups maybe substituted with a halogen atom such as a fluorine atom, a chlorine atom, a bromine atom or an iodine atom. Examples of the alkyl group having 1 to 10 carbon atoms which is substituted with the halogen atom, include a fluoromethyl group, a trifluoromethyl group, a chloromethyl group, a trichloromethyl group, a fluoroethyl group, a pentafluoroethyl group, a perfluoropropyl group, a perfluorobutyl group, a perfluorohexyl group, a perfluorooctyl group, a perchloropropyl group, a perchlorobutyl group, a perbromopropyl group and the like.

Further, all of these alkyl groups may be partially substituted with an alkoxy group such as a methoxy group, an ethoxy group or the like, an aryloxy group such as a phenoxy group or the like or an aralkyloxy group such as a benzyloxy group or the like, etc.

As the aralkyl group, an aralkyl group having 7 to 20 carbon atoms is preferable, and examples thereof include a benzyl group, a (2-methylphenyl)methyl group, a (3-methylphenyl)methyl group, a (4-methylphenyl)methyl group, a (2,3-dimethylphenyl)methyl group, a (2,4-dimethylphenyl)methyl group, a (2,5-dimethylphenyl)methyl group, a (2,6-dimethylphenyl)methyl group, a (3,4-dimethylphenyl)methyl group, a (3,5-dimethylphenyl)methyl group, a (2,3,4-timethylphenyl)methyl group, a (2,3,5-timethylphenyl)methyl group, a (2,3,6-timethylphenyl)methyl group, a (3,4,5-timethylphenyl)methyl group, a (2,4,6-timethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl)methyl group, a (n-propylphenyl)methyl group, an (isopropylphenyl)methyl group, a (n-butylphenyl)methyl group, a (sec-butylphenyl)methyl group, a (tert-butylphenyl)methyl group, a (n-pentylphenyl)methyl group, a (neopentylphenyl)methyl group,a(n-hexylphenyl)methyl group, a(n-octylphenyl)methyl group, a(n-decylphenyl)methyl group, a (n-dodecylphenyl)methyl group, a naphthylmethyl group, an anthracenylmethyl group and the like, and a benzyl group is more preferable.

All of these aralkyl groups may be partially substituted with a halogen atom such as a fluorine atom, a chlorine atom, a bromine atom or an iodine atom, an alkoxy group such as a methoxy group, an ethoxy group or the like, an aryloxy group such as a phenoxy group or the like or an aralkyloxy group such as a benzyloxy group or the like, etc.

As the aryl group, an aryl group having 6 to 20 carbon atoms is preferable, and examples thereof include a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a 2,3,4,5-tetramethylphenyl group, a 2,3,4,6-tetramethylphenyl group, a 2,3,5,6-tetramethylphenyl group, a pentamethylphenyl group, an ethylphenyl group, a n-propylphenyl group, an isopropylphenyl group, a n-butylphenyl group, a sec-butylphenyl group, a tert-butylphenyl group, a n-pentylphenyl group, a neopentylphenyl group, a n-hexylphenyl group, a n-octylphenyl group, a n-decylphenyl group, a n-dodecylphenyl group, a n-tetradecylphenyl group, a naphthyl group, an anthracenyl group and the like, and a phenyl group is more preferable.

All of these aryl groups may be partially substituted with a halogen atom such as a fluorine atom, a chlorine atom, a bromine atom or, an iodine atom or the like, an alkoxy group such as a methoxy group, an ethoxy group or the like, an aryloxy group such as a phenoxy group or the like or an aralkyloxy group such as a benzyloxy group or the like, etc.

The substituted silyl group is a silyl group substituted with a hydrocarbon group, and examples of the hydrocarbon group include alkyl groups having 1 to 10 carbon atoms such as a methyl group, ethyl group, n-propyl group, isopropyl group, n-butyl group, sec-butyl group, tert-butyl group, isobutyl group, n-pentyl group, n-hexyl group, a cyclohexyl group and the like, and aryl groups such as a phenyl group and the like. Examples of such substituted silyl group having 1 to 20 carbon atoms include mono-substituted silyl groups having 1 to 20 carbon atoms such as a methylsilyl group, ethylsilyl group, phenylsilyl group and the like; di-substituted silyl groups having 2 to 20 carbon atoms such as a dimethylsilyl group, diethylsilyl group, diphenylsilyl group and the like; and tri-substituted silyl groups having 3 to 20 carbon atoms such as a trimethylsilyl group, triethylsilyl group, tri-n-propylsilyl group, triisopropylsilyl group, tri-n-butylsilyl group, tri-sec-butylsilyl group, tri-tert-butylsilyl group, tri-isobutylsilyl group, tert-butyl-dimethylsilyl group, tri-n-pentylsilyl group, tri-n-hexylsilyl group, tricyclohexylsilyl group, triphenylsilyl group and the like, and a trimethylsilyl group, a tert-butyldimethylsilyl group or a triphenylsilyl group is preferable.

All of the hydrocarbon groups of these substituted silyl groups may be partially substituted with a halogen atom such as a fluorine atom, a chlorine atom, a bromine atom or an iodine atom, an alkoxy group such as a methoxy group, an ethoxy group or the like, an aryloxy group such as a phenoxy group or the like or an aralkyloxy group such as a benzyloxy group or the like, etc.

As the alkoxy group, an alkoxy group having 1 to 20 carbon atoms is preferable, and examples thereof include a methoxy group, an ethoxy group, a n-propoxy group, an isopropoxy group, a n-butoxy group, a sec-butoxy group, a tert-butoxy group, a n-pentoxy group, a neopentoxy group, a n-hexoxy group, a n-octoxy group, a n-dodecoxy group, a n-pentadecoxy group, a n-eicosoxy group and the like, and a methoxy group, an ethoxy group, an isopropoxy group or a tert-butoxy group is preferable.

All of these alkoxy groups may be partially substituted with a halogen atom such as a fluorine atom, a chlorine

atom, a bromine atom or, an iodine atom, an alkoxy group such as a methoxy group, an ethoxy group or the like, an aryloxy group such as a phenoxy group or the like or an aralkyloxy group such as a benzyloxy group or the like, etc.

As the aralkyloxy group, an aralkyloxy group having 7 to 20 carbon atoms is preferable, and examples thereof include a benzyloxy group, a (2-methylphenyl)methoxy group, a (3-methylphenyl)methoxy group, a (4-methylphenyl) methoxy group, a (2,3-dimethylphenyl)methoxy group, a (2,4-dimethylphenyl)methoxy group, a (2,5-dimethylphenyl) methoxy group, a (2,6-dimethylphenyl)methoxy group, a (3,4-dimethylphenyl)methoxy group, a (3,5-dimethylphenyl) methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group, a (3,4,5-trimethylphenyl)methoxy group, a (2,3,4,5-tetramethylphenyl)methoxy group, a (2,3,4,6-tetramethylphenyl)methoxy group, a (2,3,5,6-tetramethylphenyl)methoxy group, a (pentamethylphenyl)methoxy group, an (ethylphenyl)methoxy group, a (n-propylphenyl)methoxy group, an (isopropylphenyl)methoxy group, (n-butylphenyl)methoxy group, a (sec-butylphenyl)methoxy group, a (tert-butylphenyl)methoxy group, a (n-hexylphenyl)methoxy group, a (n-octylphenyl) methoxy group, a (n-decylphenyl)methoxy group, a naphthylmethoxy group, an anthracenylmethoxy group and the like, and a benzyloxy group is more preferable.

All of these aralkyloxy groups may be partially substituted with a halogen atom such as a fluorine atom, a chlorine atom, a bromine atom or an iodine atom, an alkoxy group such as a methoxy group, an ethoxy group or the like, an aryloxy group such as a phenoxy group or the like or an aralkyloxy group such as a benzyloxy group or the like, etc.

As the aryloxy group, an aryloxy group having 6 to 20 carbon atoms is preferable, and examples thereof include a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2-tert-butyl-3-methylphenoxy group, , a 2-tert-butyl-4-methylphenoxy group, a 2-tert-butyl-5-methylphenoxy group, a 2-tert-butyl-6-methylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 2-tert-butyl-3,4-dimethylphenoxy group, a 2-tert-butyl-3,5-dimethylphenoxy group, a 2-tert-butyl-3,6-dimethylphenoxy group, a 2,6-di-tert-butyl-3-methylphenoxy group, a 2-tert-butyl-4,5-dimethylphenoxy group, a 2,6-di-tert-butyl-4-methylphenoxy group, a 3,4,5-trimethylphenoxy group, a 2,3,4,5-tetramethylphenoxy group, a 2-tert-butyl-3,4,5-trimethylphenoxy group, a 2,3,4,6-tetramethylphenoxy group, a 2-tert-butyl-3,4,6-trimethylphenoxy group, a 2,6-di-tert-butyl-3,4-dimethylphenoxy group, a 2,3,5,6-tetramethylphenoxy group, a 2-tert-butyl-3,5,6-trimethylphenoxy group, a 2,6-di-tert-butyl-3,5-dimethylphenoxy group, pentamethylphenoxy group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphthoxy group, an anthracenoxy group and the like.

All of these aryloxy groups may be partially substituted with a halogen atom such as a fluorine atom, a chlorine atom, a bromine atom or an iodine atom, an alkoxy group such as a methoxy group, an ethoxy group or the like, an aryloxy group such as a phenoxy group or the like or an aralkyloxy group such as a benzyloxy group or the like, etc.

The heterocyclic group is a group having a heterocyclic ring, preferably a group having a 4 to 8-membered heterocyclic ring, and more preferably a group having a 4 to 8-memberd aromatic heterocyclic ring. The hetero atom contained in the hetero cyclic ring is preferably a nitrogen atom, oxygen atom or sulfur atom. Specific examples of such hetero cyclic group include, for example, an indolyl group, furyl group, thienyl group, pyridyl group, piperidyl group, quinolyl group, isoquinolyl group and the like, and the specific example is more preferably a furyl group.

All of these hetero cyclic groups may be partially substituted with a halogen atom such as a fluorine atom, chlorine atom, bromine atom or iodine atom, an alkoxy group such as methoxy group, ethoxy group or the like, an aryloxy group such as a phenoxy group or the like, an aralkyloxy group such as benzyloxy group or the like, or the like.

The metallocene compound represented by the general formula (III) is particularly preferably bis(2-methylindenyl)zirconium dichloride, bis(2-ethylindenyl)zirconium dichloride, bis(2-t-butylindenyl)zirconium dichloride, bis (2-phenylindenyl)zirconium dichloride, bis[2-(3,5-dimethylphenyl)indenyl]zirconium dichloride, bis[2-(2,3,5-bis-trifluoromethyphenyl)indenyl]zirconium dichloride, bis[2-(4-fluorophenyl)indenyl]zirconium dichloride, bis[2-(2,3,4,5-tetrafluorophenyl) indenyl]zirconium dichloride, bis[2-(2,3,4,5,6-pentafluorophenyl)indenyl]zirconium dichloride, (2-phenylindenyl) [2-(3,5-bis-trifluorophenyl)indenyl]zirconium dichloride, bis[2-(4-trimethylsilyl)indenyl]zirconium dichloride or bis[2-(3,5-tert-butyl-4-methoxy)indenyl]zirconium dichloride, and most preferably bis(2-phenylindenyl)zirconium dichloride. Further, specific examples of the transition metal compound in which L in the general formula(I) is an indenyl group or a substituted indenyl group, include methylenebis(indenyl)zirconium dichloride, ethylenebis(indenyl)zirconium dichloride, isopropylidenebis(indenyl)zirconium dichloride, dimethylsilylenebis(indenyl)zirconium dichloride, diphenylmethylenebis(indenyl)zirconium dichloride, methylenebis(2-methylindenyl)zirconium dichloride, methylenebis(2-n-propylindenyl)zirconium dichloride, methylenebis(2-n-butylindenyl)zirconium, methylenebis(2-n-hexylindenyl)zirconium dichloride, methylenebis(2-isopropylindenyl)zirconium dichloride, methylenebis(2-isobutylindenyl)zirconium dichloride, methylenebis(2-tert-butylindenyl)zirconium dichloride, methylenebis(2-phenylindenyl)zirconium,

methylenebis(2-trimethylsilylindenyl)zirconium dichloride, methylenebis(2,4-dimethylindenyl)zirconium dichloride, methylenebis(2,4,7-trimethylindenyl) zirconium dichloride, methylenebis(2-methyl-4-isopropylindenyl)zirconium dichloride, methylenebis(2-methyl-4-phenylindenyl) zirconium, methylenebis(2-methyl-4-naphtylindenyl) zirconium dichloride, methylenebis(2-methyl-4,5-benzoindenyl)zirconium dichloride, methylenebis(4,5,6,7-tetrahydroindenyl)zirconium dichloride, ethylenebis(2-methylindenyl)zirconium dichloride, ethylenebis(2-n-propylindenyl)zirconium dichloride, ethylenebis(2-n-butylindenyl)zirconium, ethylenebis(2-n-hexylindenyl)zirconium dichloride, ethylenebis(2-isopropylindenyl)zirconium dichloride, ethylenebis(2-isobutylindenyl)zirconium dichloride, ethylenebis(2-tert-butylindenyl) zirconium dichloride, ethylenebis(2-phenylindenyl)zirconium, ethylenebis(2-trimethylsilylindenyl)zirconium dichloride, ethylenebis(2,4-dimethylindenyl)zirconium dichloride, ethylenebis(2,4,7-trimethylindenyl)zirconium dichloride, ethylenebis(2-methyl-4-isopropylindenyl)zirconium dichloride, ethylenebis(2-methyl-4-phenylindenyl) zirconium, ethylenebis(2-methyl-4-naphtylindenyl) zirconium dichloride, ethylenebis(2-methyl-4,5-benzoindenyl)zirconium dichloride, ethylenebis(4,5,6,7-tetrahydroindenyl)zirconium dichloride, isopropylidenebis(2-methylindenyl)zirconium dichloride, isopropylidenebis(2-n-propylindenyl) zirconium dichloride, isopropylidenebis(2-n-butylindenyl)zirconium, isopropylidenebis(2-n-hexylindenyl)zirconium dichloride, isopropylidenebis(2-isopropylindenyl)zirconium dichloride, isopropylidenebis(2-isobutylindenyl)zirconium dichloride, isopropylidenebis(2-tert-butylindenyl)zirconium dichloride, isopropylidenebis(2-phenylindenyl)zirconium, isopropylidenebis(2-trimethylsilylindenyl)zirconium dichloride, isopropylidenebis (2,4-dimethylindenyl)zirconium dichloride, isopropylidenebis(2,4,7-trimethylindenyl)zirconium dichloride, isopropylidenebis(2-methyl-4-isopropylindenyl)zirconium dichloride, isopropylidenebis(2-methyl-4-phenylindenyl)zirconium dichloride, isopropylidenebis(2-methyl-4-naphtylindenyl)zirconium dichloride, isopropylidenebis(2-methyl-4,5-benzoindenyl)zirconium dichloride, isopropylidenebis(4,5,6,7-tetrahydroindenyl)zirconium dichloride, dimethylsilylenebis (2-methylindenyl)zirconium dichloride, dimethylsilylenebis(2-n-propylindenyl)zirconium dichloride, dimethylsilylenebis (2-n-butylindenyl)zirconium dichloride, dimethylsilylenebis(2-n-hexylindenyl)zirconium dichloride, dimethylsilylenebis (2-isopropylindenyl)zirconium dichloride, dimethylsilylenebis(2-isobutylindenyl)zirconium dichloride, dimethylsilylenebis(2-tert-butylindenyl)zirconium dichloride, dimethylsilylenebis(2-phenylindenyl)zirconium dichloride, dimethylsilylenebis(2-trimethylsilylindenyl)zirconium dichloride, dimethylsilylenebis(2,4-dimethylindenyl)zirconium dichloride, dimethylsilylenebis(2,4,7-trimethylindenyl)zirconium dichloride, dimethylsilylenebis(2-methyl-4-isopropylindenyl) zirconium dichloride, dimethylsilylenebis(2-methyl-4-phenylindenyl)zirconium dichloride, dimethylsilylenebis(2-methyl-4-naphtylindenyl)zirconium dichloride, dimethylsilylenebis(2-methyl-4,5-benzoindenyl)zirconium dichloride, dimethylsilylenebis(4,5,6,7-tetrahydroindenyl)zirconium dichloride, diphenylmethylenebis(2-methylindenyl) zirconium dichloride, diphenylmethylenebis (2-n-propylindenyl)zirconium dichloride, diphenylmethylenebis(2-n-butylindenyl)zirconium dichloride, diphenylmethylenebis(2-n-hexylindenyl)zirconium dichloride, diphenylmethylenebis(2-isopropylindenyl)zirconium dichloride, diphenylmethylenebis(2-isobutylindenyl)zirconium dichloride, diphenylmethylenebis(2-tert-butylindenyl)zirconium dichloride, diphenylmethylenebis(2-phenylindenyl)zirconium dichloride, diphenylmethylenebis(2-trimethylsilylindenyl)zirconium dichloride, diphenylmethylenebis(2,4-dimethylindenyl)zirconium dichloride, diphenylmethylenebis(2,4,7-trimethylindenyl)zirconium dichloride, diphenylmethylenebis(2-methyl-4-isopropylindenyl) zirconium dichloride, diphenylmethylenebis(2-methyl-4-phenylindenyl)zirconium dichloride, diphenylmethylenebis(2-methyl-4-naphtylindenyl) zirconium dichloride, diphenylmethylenebis(2-methyl-4,5-benzoindenyl) zirconium dichloride, diphenylmethylenebis(4,5,6,7-tetrahydroindenyl) zirconium dichloride, diphenylsilylenebis(2-methylindenyl)zirconium dichloride, diphenylsilylenebis(2-n-propylindenyl)zirconium dichloride, diphenylsilylenebis(2-n-butylindenyl)zirconium dichloride, diphenylsilylenebis(2-n-hexylindenyl)zirconium dichloride, diphenylsilylenebis(2-isopropylindenyl)zirconium dichloride, diphenylsilylenebis(2-isobutylindenyl)zirconium dichloride, diphenylsilylenebis(2-tert-butylindenyl)zirconium dichloride, diphenylsilylenebis(2-phenylindenyl)zirconium dichloride, diphenylsilylenebis(2-trimethylsilylindenyl) zirconium dichloride, diphenylsilylenebis(2,4-dimethylindenyl)zirconium dichloride, diphenylsilylenebis(2,4,7-trimethylindenyl)zirconium dichloride, diphenylsilylenebis(2-methyl-4-isopropylindenyl) zirconium dichloride, diphenylsilylenebis(2-methyl-4-phenylindenyl)zirconium dichloride, diphenylsilylenebis(2-methyl-4-naphtylindenyl)zirconium dichloride, diphenylsilylenebis(2-methyl-4,5-benzoindenyl)zirconium dichloride, diphenylsilylenebis(4,5,6,7-tetrahydroindenyl)zirconium dichloride and the like. Further, Compounds in which zirconium is replaced with titanium or hafnium in the above compounds are also exemplified. Among these, compounds in which the bridging group Y is a disubstituted silicon atom, such as dimethylsilylenebis(2-methylindenyl)zirconium dichloride, dimethylsilylenebis(2-n-propylindenyl)zirconium dichloride, dimethylsilylenebis(2-n-butylindenyl)zirconium dichloride, dimethylsilylenebis(2-n-hexylindenyl)zirconium dichloride, dimethylsilylenebis(2-isopropylindenyl)zirconium dichloride, dimethylsilylenebis (2-isobutylindenyl)zirconium dichloride, dimethylsilylenebis(2-tert-butylindenyl)zirconium dichloride, dimethylsilylenebis(2-phenylindenyl)zirconium dichloride, dimethylsilylenebis(2-trimethylsilylindenyl)zirconium dichloride, dimethylsilylenebis(2,4-dimethylindenyl)zirconium dichloride, dimethylsilylenebis(2,4,7-trimethylindenyl)zirconium dichloride, dimethylsilylenebis(2-methyl-4-isopropylindenyl) zirconium dichloride, dimethylsilylenebis(2-methyl-4-phenylindenyl) zirconium dichloride, dimethylsilylenebis(2-methyl-4-naphtylindenyl)zirconium dichloride, dimethylsilylenebis(2-methyl-4,5-benzoindenyl)zirconium dichloride, dimethylsilylenebis(4,5,6,7-tetrahydroindenyl)zirconium dichloride, diphenylsilylenebis(2-methylindenyl)zirconium dichloride, diphenylsilylenebis(2-n-propylindenyl)zirconium dichloride, diphenylsilylenebis(2-n-butylindenyl)zirconium dichloride, diphenylsilylenebis(2-n-hexylindenyl)zirconium dichloride, diphenylsilylenebis(2-isopropylindenyl)zirconium dichloride, diphenylsilylenebis(2-isobutylindenyl)zirconium dichloride, diphenylsilylenebis(2-tert-butylindenyl)zirconium dichloride, diphenylsilylenebis(2-phenylindenyl)zirconium dichloride, diphenylsilylenebis(2-trimethylsilylindenyl)zirconium dichloride, diphenylsilylenebis(2,4-dimethylindenyl)zirconium dichloride, diphenylsilylenebis(2,4,7-trimethylindenyl)zirconium dichloride, diphenylsilylenebis(2-methyl-4-isopropylindenyl) zirconium dichloride, diphenylsilylenebis(2-methyl-4-phenylindenyl)zirconium dichloride, diphenylsilylenebis (2-methyl-4-naphtylindenyl)zirconium dichloride, diphenylsilylenebis(2-methyl-4,5-benzoindenyl)zirconium dichloride, diphenylsilylenebis(4,5,6,7-tetrahydroindenyl)zirconium dichloride and the like are preferable.

Specific examples of the transition metal compound in which L in the general formula (I) is a substituted cyclopentadienyl group, include dimethylsilylene (cyclopentadienyl)(3-methylcyclopentadienyl)zirconium dichloride, dimethylsilylene(cyclopentadienyl)(3-tert-butylcyclopenta dienyl)zirconium dichloride, dimethylsilylene(cyclopentadienyl)(2,4-dimethylcyclopenta dienyl)zirconium dichloride, dimethylsilylene(cyclopentadienyl)(2,3,5-trimethylcyclope ntadienyl)zirconium dichloride, dimethylsilylene(3-methylcyclopentadienyl)(4-methylcyclop entadienyl)zirconium dichloride, dimethylsilylene(3-tertbutylcyclopentadienyl)(4-tert-buty lcyclopentadienyl)zirconium dichloride, dimethylsilylene(2,4-dimethylcyclopentadienyl)(3,5-dimeth ylcyclopentadienyl)zirconium dichloride, dimethylsilylene(2,3,5-trimethylcyclopentadienyl)(2,4,5-t rimethylcyclopentadienyl)zirconium dichloride, methylene(cyclopentadienyl)(3-methylcyclopentadienyl)zirc onium dichloride, methylene(cyclopentadienyl) (3-tert-butylcyclopentadienyl)zirconium dichloride, methylene(cyclopentadienyl) (2,4-dimethylcyclopentadienyl)zirconium dichloride, methylene(cyclopentadienyl) (2,3,5-trimethylcyclopentadien yl)zirconium dichloride, methylene(3-methylcyclopentadienyl) (4-methylcyclopentadienyl)zirconium dichloride, methylene(3-tertbutylcyclopentadienyl)(4-tert-butylcyclop entadienyl)zirconium dichloride, methylene(2,4-dimethylcyclopentadienyl)(3,5-dimethylcyclo pentadienyl)zirconium dichloride, methylene(2,3,5-trimethylcyclopentadienyl)(2,4,5-trimethy lcyclopentadienyl)zirconium dichloride and the like. Further, compounds in which the zirconium atom is replaced with a titanium atom or a hafnium atom in the zirconium compounds described above can be listed.

When L represents a substituted cyclopentadienyl group in the general formula (I), particularly preferable are transition metal compounds of the following general formula (IV):

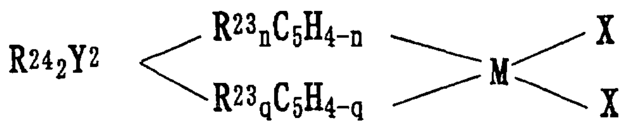

(IV)

(in the above-mentioned general formula (IV), ($R^{23}{}_n$-$C_5H_{4-n}$) and ($R^{23}{}_q$-$C_5H_{4-q}$) are substituted $\eta^5$-cyclopentadienyl groups respectively, n and q represent an integer from 1 to 3. $R^{23}$s may be the same or different, and each represents a halogen atom, alkyl group, aralkyl group, aryl group, substituted silyl group, alkoxy group, aralkyloxy group, aryloxy group or heterocyclic group, and the positions and/or kinds of $R^{23}$s in the substituted $\eta^5$-cyclopentadienyl groups are so selected that a symmetrical surface including M does not exist. Each of $R^{24}$ and X represents a hydrogen atom, halogen atom, alkyl group, aralkyl group, aryl group, substituted silyl group, alkoxy group, aralkyloxy group, aryloxy group or heterocyclic group. $R^{24}$ and X may be completely the same or different mutually. $Y^2$ represents a carbon atom, silicon atom, germanium atom or tin atom.).

Herein, $R^{23}$, $R^{24}$ and X are selected from halogen atoms, alkyl groups, aralkyl groups, aryl groups, substituted silyl groups, alkoxy groups, aralkyloxy groups, aryloxy groups and heterocyclic groups. Specific examples are the same as described for the above-mentioned general formula (IV). In the general formula (IV), it is necessary that the positions and/or kinds of $R^{23}$s in the substituted $\eta^5$-cyclopentadienyl groups are so selected that a symmetrical surface including M does not exist, and preferable are compounds in which two substituted $\eta^5$-cyclopentadienyl groups are mutually different. $R^{23}$ is preferably an alkyl group or heterocyclic group.

As the specific examples of ($R^{23}{}_n$-$C_5H_{4-n}$) and ($R^{23}{}_q$-$C_5H_{4-q}$), the substituted $\eta^5$-cyclopentadienyl groups described in the explanation of the general formula (I) are listed.

In the above-mentioned general formula (IV), $Y^2$ represents a carbon atom, silicon atom, germanium atom or tin atom, and a carbon atom or a silicon atom is preferable.

Specific examples of compounds of the general formula (IV) can be selected from transition metal compounds of the general formula (I) in which L represents a substituted cyclopentadienyl group. These transition metal compounds may be used alone or in combination.

Further, transition metal compounds of the following general formula (II) are preferably used among transition metal compounds of the above-mentioned general formula (III), since stereo block poly($\alpha$-olefins) having high isotactic pentad fraction can be obtained when such compounds are used.

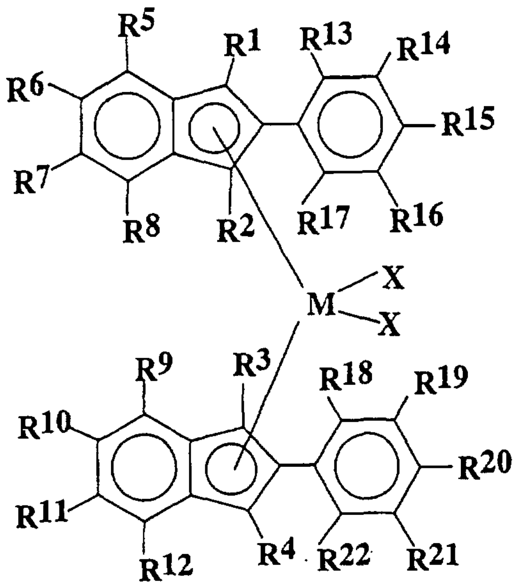

(II)

(in the formula, each of $R^1$ to $R^{22}$ independently represents a hydrogen atom, halogen atom, alkyl group, aryl group, aralkyl group or substituted silyl group, and $R^1$ to $R^{22}$ may be the same or different, and any adjacent two moieties of $R^1$ to $R^{22}$ on the same ring may form a ring having 5 to 8 carbon atoms. M represents a transition metal atom of group IV in the periodic table of element, and X represents a hydrogen atom, halogen atom, alkyl group, aryl group, aralkyl group or alkoxy group, and two Xs may be the same or different.). M is the same as in the general formula (III), and represents preferably a titanium atom, zirconium atom or hafnium atom, particularly preferably, a zirconium atom.

Each of $R^1$ to $R^{22}$ independently represents a hydrogen atom, halogen atom, alkyl group, aryl group, aralkyl group or substituted silyl group, and examples thereof are the same as described for the above-mentioned general formulae (I) and (III), and any adjacent two moieties of $R^1$ to $R^{22}$ on the same ring may form a ring having 5 to 8 carbon atoms. Also regarding X, the same moieties as listed for X in the above-mentioned general formulae (I) and (III) are exemplified, and two Xs may be the same or different.

As the halogen atom in the substituents $R^1$ to $R^{22}$ or X, a fluorine atom, chlorine atom and iodine atom are listed, and it is particularly preferable that $R^1$ to $R^{22}$ represent a fluorine atom and X represents a chlorine atom.

$R^1$ to $R^{12}$ in the above-mentioned general formula (II) represent particularly preferably a hydrogen atom. Each of $R^{13}$ to $R^{22}$ independently represents preferably a hydrogen atom, halogen atom or alkyl group, further preferably a hydrogen atom, fluorine atom, methyl group or trifluoromethyl group, particularly preferably a hydrogen atom. X represents preferably a halogen atom, alkyl group or alkoxy group.

As the metallocene compound of the above-mentioned general formula (II), those included in the definition in the general formula (II), among specific compounds as described in the above-mentioned explanation of compounds of the general formula (III), are exemplified.

These metallocene compounds may be used alone or in combination of two or more.

Transition metal compounds of the above-mentioned general formula (I) in which L represents a substituted indenyl group are preferably used, since an $\alpha$-olefin polymer having a high stereoregularity can be obtained when such compounds are used.

(C) Organometallic compound

As an organometallic compound(C), compounds represented by the above-described general formula(1) are listed, and it is preferable to use one or more kinds thereof. More preferably, it is an organoaluminum compound represented by the general formula (3):

$$R^{c}{}_{b}AlY_{3-b} \qquad (3)$$

(wherein $R^c$ represents a hydrocarbon group having 1 to 8 carbon atoms; Al represents an aluminum atom; Y represents

a hydrogen atom and/or halogen atom; and b represents a number satisfying $0 < b \leqq 3$).

Specific examples of $R^c$ in the general formula (3) representing the organoaluminum compound include a methyl group, ethyl group, n-propyl group, n-butyl group, isobutyl group, n-hexyl group, 2-methylhexyl group, n-octyl group and the like. Among them, an ethyl group, n-butyl group, isobutyl group and n-hexyl group are preferred. Specific examples of the halogen atom as for Y include a fluorine atom, chlorine atom, bromine atom and iodine atom, preferably a chlorine atom.

Specific examples of the organoaluminum compound represented by the general formula (3) include trialkylaluminums such as trimethylaluminum, triethylaluminum, tri-n-propylaluminum, tri-n-butylaluminum, triisobutylaluminum, tri-n-hexylaluminum, tri-n-octylaluminum and the like; dialkylaluminum chlorides such as dimethylaluminum chloride, diethylaluminum chloride, di-n-propylaluminum chloride, di-n-butylaluminum chloride, diisobutylaluminum chloride, di-n-hexylaluminum chloride and the like; alkylaluminum dichlorides such as methylaluminum dichloride, ethylaluminum dichloride, n-propylaluminum dichloride, n-butylaluminum dichloride, isobutylaluminum dichloride, n-hexylaluminum dichloride and the like; dialkylaluminum hydride such as dimethylaluminum hydride, diethylaluminum hydride, di-n-propylaluminum hydride, di-n-butylaluminum hydride, diisobutylaluminum hydride, di-n-hexylaluminum hydride and the like. Among them, trialkylaluminums are preferred, and trimethylaluminum, triethylaluminum, tri-n-butylaluminum, triisobutylaluminum or tri-n-hexylaluminum is more preferred and triisobutylaluminum and tri-n-hexylaluminum are most preferred.

These organoaluminum compounds may be used alone or in combination of two or more thereof.

As the catalyst for polymerization of α-olefins of the present invention, that obtained by contacting (A) a modified particles with a transition metal compound (B) having a stereoregular polymerization ability of α-olefins, or that obtained by contacting modified particles (A) with a transition metal compound (B) having a stereoregular polymerization ability of α-olefins and an organometallic compound (C) are listed, and the latter has a high activity and is preferable.

The catalyst for polymerization of α-olefins of the present invention is an catalyst for stereoregular polymerization of α-olefins, which provides a polymer which is uniform in polymer particle size, when applied to polymerization accompanying formation of α-olefin polymer particles. The catalyst for polymerization of α-olefins of the present invention is preferably an the catalyst for stereoregular polymerization of α-olefins which provides an α-olefin polymer having a geometric standard deviation based on volume of the particle size of the resulted polymer of 2.5 or less, more preferably 2.0 or less, further preferably 1.7 or less, when applied to polymerization accompanying formation of α-olefin polymer particles. The process for producing an α-olefin polymer of the present invention is preferably a process for producing a stereoregular α-olefin polymer, which provides an α-olefin polymer having a geometric standard deviation based on volume of the particle size of the resulted polymer of 2.5 or less (more preferably 2.0 or less, further preferably 1.7 or less), when applied to polymerization accompanying formation of α-olefin polymer particles.

When the catalyst for polymerization of α-olefins of the present invention is obtained by contacting the modified particle (A) with the transition metal compound (B), or further with the organometallic compound (C), the amount of the component (B) used is usually from $1 \times 10^{-6}$ to $1 \times 10^{-3}$ mol, preferably from $5 \times 10^{-6}$ to $1 \times 10^{-4}$ mol per 1 g of the component (A). Further, the amount of the organometallic compound as the component (C) used is preferably 0.01 to 10,000, more preferably 0.1 to 5,000, most preferably 1 to 2,000 in terms of a molar ratio (C)/(B) of metal atom of the organometallic compound as the component (C) to transition metal atom as the component (B).

In the present invention, the component (A) and the component (B), or further the component (C) can be charged into a reactor in any order in polymerization, and any of them may be selected and may be allowed to contact mutually in any combination before charging into a reactor, but it is particularly preferable that the component (A) is contacted with an α-olefin, then, the resulted contacted substance is contacted with the component (B) and the component (C) to polymerize an α-olefin, to produce an α-olefin polymer.

In this case, contact conditions of the component (A) with an α-olefin are not particularly restricted, and the contact temperature is preferably from -5 to 90°C, more preferably from 5 to 50°C. The contact may be carried out in the presence of an aliphatic hydrocarbon solvent such as butane, pentane, heptane, octane or the like, an aromatic hydrocarbon solvent such benzene, toluene or the like, or a halogenated hydrocarbon such as methylene chloride or the like. The α-olefin used in this contact may be the same as or different from a monomer of an α-olefin polymer to be produced, and further, two or more α-olefins may also be used.

In the present invention, as the monomer used in polymerization, α-olefins having 3 to 20 carbon atoms can be used, and two or more monomers can also be used simultaneously. Such monomers are exemplified below, but the present invention is not limited thereto. The specific examples of the α-olefin include propylene, 1-butene, 1-pentene, 1-hexene, 1-heptene, 1-octene, 1-nonene, 1-decene, 4-methyl-1-pentene, vinylcyclohexane and the like.

Further, in the present invention, copolymerization of the α-olefins with a comonomer copolymerizable with the α -olefin is suitably carried out. As the comonomer copolymerizable with the α-olefin, ethylene, diolefin compounds and the like can be listed. As the diolefin compound, conjugated dienes and non-conjugated dienes are listed, and specific examples of the compound include non-conjugated dienes such as 1,5-hexadiene, 1,4-hexadiene, 1,4-pentadiene, 1,7-octadiene, 1,8-nonadiene, 1,9-decadiene, 4-methyl-1,4-hexadiene, 5-methyl-1,4-hexadiene, 7-methyl-1,6-octadiene, 5-ethylidene-2-norbornene, dicyclopentadiene, 5-vinyl-2-norbornene, 5-methyl-2-norbornene, norbornadiene, 5-methylene-2-norbornene, 1,5-cyclooctadiene, 5,8-endomethylenehexahydronaphthalene and the like, and conjugated dienes such as 1,3-butadiene, isoprene, 1,3-hexadiene, 1,3-octadiene, 1,3-cyclooctadiene, 1,3-cyclohexadiene and the like.

The process for producing an α-olefin polymer of the present invention is suitable as a process for producing an isotactic stereoregular α-olefin polymer, and particularly suitableas a process for producing an isotactic stereoregular propylene polymer.

As the specific examples of the isotactic stereoregular propylene polymer, there are listed homopolymers of propylene; random copolymers of propylene with a comonomer such as ethylene and/or α-olefins having 4 to 12 carbon atoms in such an amount that does not break crystallinity; block copolymers obtained by homopolymerizing propylene or copolymerizing propylene with ethylene or α-olefins having 4 to 12 carbon atoms (referred to as "pre-stage polymerization") and then polymerizing α-olefins having 3 to 12 carbon atoms with ethylene in one stage or multiple stages (referred to as "post-stage polymerization"); and the like. The amount that does not break crystallinity in a random copolymer differs depending on the kind of a comonomer, and in the case of ethylene for example, the amount of repeating units derived from ethylene in a copolymer is usually 10 wt% or less, and in the case of another α-olefin such as 1-butene or the like, the amount of repeating units derived from an α-olefin in a copolymer is usually 30 wt% or less, preferably 10 wt% or less. In the case of the pre-stage polymerization for a block copolymer, the amount of ethylene polymerized, for example, is usually 10 wt% or less, preferably 3 wt% or less, further preferably 0.5 wt% or less, and the amount of an α-olefin polymerized is usually 15 wt% or less, preferably 10 wt% or less, and in the case of the post-stage polymerization, the amount of ethylene polymerized is usually from 20 to 80 wt%, preferably from 30 to 50 wt%. (How much is the polymerization amount of the pre-stage? Is it not necessary to restrict it?)

As specific examples of combination of monomers constituting a copolymer, combinations of propylene and ethylene, propylene and 1-butene, propylene and 1-hexane, and the like are exemplified, but the present invention is not limited to these.

As a measure of isotactic stereoregularity, an isotactic pentad fraction is used.

Herein, the isotactic pentad fraction is a fraction of propylene monomer units existing at the center of an isotactic chain as a pentad unit, in other words, the chain in which five propylene monomer units are successively meso-bonded, in the crystalline polypropylene molecular chain as measured by the method disclosed by A. Zambelli et al. in Macromolecules, 6, 925 (1973), namely by use of $^{13}$C-NMR. But, the assignment of NMR absorption peak is determined according to the method proposed in Macromolecules, 8, 687 (1976) published thereafter. The isotactic pentad fraction can be abbreviated as "mmmm%". The theoretical upper limit of "mmmm%" is 1.000.

According to the present invention, an isotactic stereoregular α-olefin polymer having a mmmm% of 0.800 or more, further 0.900 or more (more preferably 0.940 or more, further preferably 0.955 or more) can be produced efficiently.

In the present invention, as described above, by selecting the transition metal compound component (B) in the catalyst, it is possible to produce a stereo block poly(α - olefin) having higher isotactic pentad fraction as compared with a conventional one. The α-olefin is as those described above, and propylene is particularly preferable.

The stereo block poly(α-olefin) is a polymer which contains an isotactic segment and an atactic segment in one molecular chain, which shows a high melting point though the stereoregularity (isotactic pentad fraction) is comparatively low as the whole body, and which is different from conventional isotactic crystalline poly( α-olefins) and atactic poly( α-olefins).

According to the present invention, a stereo block poly(α-olefin) having a higher stereoregularity expressed as the isotactic pentad fraction, and having higher melting point can also be obtained.

The polymerization also is not particularly restricted, and a publicly-known gas phase polymerization in gaseous monomers, solution polymerization using a solvent, slurry polymerization and the like are possible. As the solvent used in solution polymerization or slurry polymerization, aliphatic hydrocarbon solvents such as butane, pentane, heptane, octane and the like, aromatic hydrocarbon solvents such as benzene, toluene and the like, and halogenated hydrocarbon solvents such as methylene chloride and the like are listed, and alternatively, an olefin itself can be used as a solvent (bulk polymerization). Among them, polymerizations accompanying formation of an α-olefin polymer particles (for example, slurry polymerization, gas phase polymerization, bulk polymerization and the like) are particularly suitable. The polymerization mode may be any of batch-wise polymerization and continuous polymerization, and further, the polymerization may be divided into two or more stages under different reaction conditions. The polymerization time is generally determined appropriately depending on the kind of the intended olefin polymer, and the reaction apparatus, and can be from 1 minute to 20 hours.

Slurry polymerization may be advantageously conducted according to a publicly known slurry polymerization method and polymerization conditions, but is not restricted to the known method and conditions. As the preferable polymerization method in a slurry method, a continuous type reactor in which feeding substances, a diluting agent and the like are continuously added, if necessary, and a polymer product is taken out continuously or at least periodically.

Regarding the reactor, a method using a loop reactor, or a plurality of stirring reactors arranged in series, parallel or combination thereof, the reactors being different or the reactors being different in conditions, are listed.

As the diluting agent, for example, inert diluting agents (medium) such as a paraffin, cycloparaffin or aromatic hydrocarbons can be used. The temperature of the polymerization reactor or reaction region can be usually from about 0 to about 150°C, preferably from 30 to 100°C. The pressure can be usually changed between about 0.1 MPa and about 10 MPa, and preferably 0.5 MPa and 5 MPa. A pressure can be adopted under which a catalyst can be maintained in suspended condition, a medium and at least a part of monomers and comonomers can be maintained in a liquid phase, and monomers and comonomers can be allowed to contact mutually. Therefore, the medium, temperature and pressure may advantageously be selected so that an α-olefin is produced as solid particles, and recovered under such form.

Gas phase polymerization also may be advantageously be carried out according to known gas phase polymerization method and polymerization conditions, but is not necessarily restricted such method and conditions. As the gas phase polymerization reaction apparatus, a fluidized bed type reaction vessel, preferably, a fluidized bed type reaction vessel having an enlarged part is used. Even if a reaction apparatus has a stirring blade equipped in a reaction vessel, there is no problem.

As the method of supplying components into a polymerization vessel, methods in which components are fed under a condition free from water using an inert gas such as nitrogen, argon or the like, hydrogen or the like, method in which components are dissolved in or diluted with a solvent and fed in the form of a solution or slurry, and the like can be used.

Catalyst components may be fed separately, or any of them may be selected and may be allowed to contact mutually in any order previously before feeding.

Regarding polymerization conditions, the reaction temperature is less than a temperature at which the produced polymer is melted, preferably from 0 to 150°C, particularly preferably from 30 to 100°C. Further, for the purpose of controlling melt-flowability of the finished article, hydrogen may also be added as a molecular weight controlling agent. Further, in polymerization, an inert gas may coexist in a mixture gas.

The molecular weight of an α-olefin polymer can be controlled by known various means such as control of the temperature of a reaction region, introduction of hydrogen, and the like.

Respective catalyst components, monomers (and comonomers) can be added to a reactor or reaction region in any order according to any known method. For example, a method in which respective catalyst components, monomers (and comonomers) are added to a reaction region simultaneously, or a method in which they are added sequentially, and the like, can be used. If desired, catalyst components can be allowed to mutually contact previously in an inert atmosphere, before contact with monomers (and comonomers).

Further, particularly when a transition metal compound of the above-mentioned general formula (I) is used, an α -olefin polymer having higher molecular weight can also be produced, and preferably, an α-olefin polymer having a weight average molecular weight of 350,000 to 600,000 (more preferably 380,000 to 600,000, further preferably 400,000 to 600,000) can be produced.

## EXAMPLES

The following examples and comparative examples will illustrate the present invention further in detail below, but dot not limit the scope of the present invention. Properties of olefin polymers in examples were measured according to the following methods.

(1) Molecular weight and molecular weight distribution:

Molecular weight and molecular weight distribution were determined under the following conditions using a gel permeation chromatograph (manufactured by Waters, 150, C). The molecular weight distribution (Mw/Mn) was expressed by a ratio of weight average molecular weight (Mw) to number average molecular weight (Mn).

Column: Shodex AT806-M/S
Measuring temperature: set at 145°C
Measuring concentration: 8 mg/8 ml O-dichlorobenzene

(2-1) $^{13}$C-NMR measurement (Examples 1 and 2 and 4 to 7, Comparative Examples 1, 3 and 4)

200 mg of a polymer was dissolved in 3 ml of a mixed solvent of orthodichlorobenzene/heavy orthodichlorobenzene (orthodichlorobenzene/heavy orthodichlorobenzene=4/1 (volume ratio)), and $^{13}$C-NMR was measured by using JNM-EX270 manufactured by JEOL Ltd.

(2-2) $^{13}$C-NMR measurement (Example 3 and Comparative Example 2)

200 mg of a sample was dissolved in 3 ml of a mixed solvent of o-dichlorobenzene/heavy benzene (o-dichlorobenzene/heavy benzene=3/1, and $^{13}$C-NMR was measured.

(3) Melting point of polymer: Melting point was measured under the following conditions using Seiko SSC-5200.

Raising of temperature: from 25°C to 200°C (20°C/min.), kept for 5 minutes
Cooling: from 200°C to -50°C (20°C/min.), kept for 5 minutes
Measurement: from -50°C to 300°C (20°C/min.)

(4) Intrinsic viscosity [ η ]: 100 mg of the resulted copolymer was dissolved in 50 ml of tetralin at 135°C, and limiting viscosity [ η ] was calculated from falling speed of the tetralin solution containing the sample dissolved measured using a Ubbellohde type viscometer set in a oil bath maintained at 135°C.
(5) Measurement of particle size distribution of polymer

Particle size distribution was measured using laser scattering type particle size distribution measuring apparatus (HELOS, manufactured by JEOL Ltd.). Geometric standard deviation (σg) based on volume of the particle size of a polymer was calculated according to the following formula based on measured results.

$$\sigma g = D_{50\%}/D_{15.87\%}$$

In the above-described formula, $D_{50\%}$ represents a polymer particle size having an accumulated volume fraction of 50%, $D_{15.87\%}$ represents a polymer particle size having an accumulated volume fraction of 15.87%. It shows that when the geometric standard deviation (σg) is larger, polymer particle size distribution is broader, and when smaller, the distribution is narrower.

Example 1

(1) Contact treatment of (a) particle with (b) organometallic compound

A 5-liter four-necked flask equipped with a stirrer, dropping funnel and thermometer was dried under reduced pressure, then, purged with nitrogen. Into the flask, 366 g of silica (manufactured by Devison, #948; average particle size=55.0 μm: geometric standard deviation based on volume of particle size=1.52; micro pore volume=1.60 ml/g; specific surface area=310m$^2$/g) which had been heated at 300°C under nitrogen flow was collected. To this was added 3.3 liter of toluene to prepare a slurry, which was cooled to 5°C using an ice bath, thereafter, 366 ml of a toluene solution of trimethylaluminum of which concentration had been controlled to 2 mmol/ml, was added gradually dropwise. In this procedure, generation of a gas was observed. The mixture was stirred at 5°C for 30 minutes and at 80°C for 2 hours, then, the supernatant was filtrated, and the remaining solid components were washed four times with 3.3 liter of toluene at 80°C.

(2) Compound(c) treatment

After the above-mentioned treatment (1), 3.3 liter of toluene was added to give a slurry, which was cooled to 5°C using an ice bath, then, to this was added gradually 400 ml of a solution of pentafluorophenol in toluene of which concentration had been controlled to 2 mmol/ml. In that case, generation of a gas was observed. The mixture was stirred at 5°C for 30 minutes and at 80°C for 2 hours, then, the supernatant was filtrated, and the remaining solid components were washed four times with 3.3 liter of toluene at 80°C, further, washed twice with 3.3 liter of hexane at room temperature. Thereafter, the solid component was dried under reduced pressure, to obtain 489 g of a flowable solid component.

(3) Propylene polymerization

1 liter of toluene was charged in an argon-purged stainless autoclave having an internal volume of 3 liter equipped with a stirrer after drying under reduced pressure, then, 29.7 mg of the solid component (catalyst component (A)) obtained in (2) described above and 100 g of propylene were charged, then, the mixture was heated to 40°C. Thereafter, 1.4 ml of a solution of triisobutylaluminum in toluene of which concentration had been controlled to 1 mmol/ml as the catalyst component (C) was allowed to contact with 1.05 ml of a solution of dimethylsilylenebis(2-methyl-1-indenyl)zirconium dichloride in toluene of which concentration had been controlled to 2 μmol/ml as the catalyst component (B) in another stainless vessel, then, the mixture was put into the above-mentioned autoclave, and polymerization was conducted at 40°C. During the polymerization, propylene was fed continuously while maintaining the total pressure at 0.6 MPa. After 20 minutes, 10 ml of isobutanol was added to terminate the polymerization, then, the unreacted monomer was purged. The produced polymer was dried at 60°C for 5 hours under reduced pressure, to obtain 62 g of a polypropylene powder.

Therefore, the yield of polypropylene per 1 mol of a transition metal compound and 1 hour of polymerization (hereinafter, abbreviated as "g-PP/mol-Zr · hr") was $8.9 \times 10^7$ (= g-PP/mol-Zr · hr), and the stereoregularity of the resulted propylene polymer was 0.964% (= mmmm%). The polymerization results were shown in Table 1.

Example 2

Polymerization of propylene was conducted in the same manner as in Example 1 (3) except that the use amount of the solid component (catalyst component (A)) was changed to 76.4 mg and the polymerization time was changed to 60 minutes. The polymerization results were shown in Table 1.

Example 3

(1) Propylene polymerization

1 liter of toluene was charged in an argon-purged stainless autoclave having an internal volume of 3 liter equipped with a stirrer after drying under reduced pressure, then, 100 g of propylene was charged, then, the mixture was heated up to 40°C. Thereafter, 31.5 mg of the solid component obtained in Example 1 (2) as the catalyst component (A) was allowed to contact with 2.1 ml of a solution of triisobutylaluminum in toluene of which concentration had been controlled to 1 mmol/ml as the catalyst component (C) and 1.05 ml of a solution of dimethylsilylbis(2-methyl-1-indenyl) zirconium dichloride in toluene of which concentration had been controlled to 2 μmol/ml as the catalyst component (B) in another stainless vessel, then, the mixture was put into the above-mentioned autoclave, and polymerization was conducted at 40°C. During the polymerization, propylene was fed continuously while maintaining the total pressure at 0.6 MPa. After 60 minutes, 10 ml of isobutanol was added to terminate the polymerization, then, the unreacted monomer was purged. A polymer produced was dried at 60°C for 5 hours under reduced pressure, to obtain 31 g of a polypropylene powder. The polymerization results were shown in Table 1.

Example 4

(1) Propylene polymerization

1 liter of toluene was charged in an argon-purged stainless autoclave having an internal volume of 3 liter equipped with a stirrer after drying under reduced pressure, then, 100 g of propylene was charged, then, the mixture was heated to 40°C. Thereafter, 2.1 ml of a solution of triisobutylaluminum in toluene of which concentration had been controlled to 1 mmol/ml as the catalyst component (C) was allowed to contact with 1.05 ml of a solution of dimethylsilylenebis(2-methyl-1-indenyl)zirconium dichloride in toluene of which concentration had been controlled to 2 μmol/ml as the catalyst component (B) in another stainless vessel, then, the mixture was put into the above-mentioned autoclave, then a toluene slurry obtained by adding 31.1 mg of the solid component obtained in Example 1 (2) as the catalyst component (A) to 10 ml of toluene, and polymerization was conducted at 40°C. During the polymerization, propylene was fed continuously while maintaining the total pressure at 0.6 MPa. After 60 minutes, 10 ml of isobutanol was added to terminate the polymerization, then, the unreacted monomer was purged. A polymer produced was dried at 60°C for 5 hours under reduced pressure, to obtain 0.25 g of a polypropylene powder. The polymerization results were shown in Table 1.

Comparative Example 1

(1) Propylene polymerization

1.3 ml of a solution of triisobutylaluminum in toluene of which concentration had been controlled to 1 mmol/ml as the catalyst component (C) was allowed to contact with 0.65 ml of a solution of dimethylsilylbis(2-methyl-1-indenyl) zirconium dichloride in toluene of which concentration had been controlled to 2 μmol/ml as the catalyst component (B), then, the mixture was put into an autoclave, then, a solution obtained by adding 1.2 mg of triphenylmethyltetrakis (pentafluorophenyl) borate to 0.58 ml of toluene was added, and polymerization was conducted at 40°C. During the polymerization, propylene was fed continuously while maintaining the total pressure at 0.6 MPa. After 60 minutes, 20 ml of isobutanol was added to terminate the polymerization, then, the unreacted monomer was purged. The produced polymer was dried at 60°C for 5 hours under reduced pressure, to obtain 140 g of a polypropylene powder. The polymerization results were shown in Table 1. The resulted polymer had low stereoregularity and molecular weight.

Table 1

| | Polymerization activity (g-PP/mol-Zr·hr) | mmmm% | Mw | Mw/Nn |
|---|---|---|---|---|
| Example 1 | $8.9 \times 10^7$ | 0.964 | 401,280 | 1.9 |
| Example 2 | $2.6 \times 10^7$ | 0.967 | 448,800 | 1.9 |
| Example 3 | $1.5 \times 10^7$ | 0.962 | 356,400 | 2.4 |
| Example 4 | $0.01 \times 10^7$ | 0.967 | 385,440 | 2.3 |
| Comparative Example 1 | $11.1 \times 10^7$ | 0.959 | 295,680 | 2.0 |

Example 5

(1) Propylene polymerization

1 liter of toluene was charged in an argon-purged stainless autoclave having an internal volume of 3 liter equipped with a stirrer, then, 100 g of propylene was charged, then, the mixture was heated to 40°C. Thereafter, 2.4 ml of a solution of triisobutylaluminum in toluene of which concentration had been controlled to 1 mmol/ml as the catalyst component (C) was allowed to contact with 1.2 ml of a solution of ethylenebis(indenyl)zirconium dichloride in toluene of which concentration had been controlled to 2 μmol/ml as the catalyst component (B) in another stainless vessel and 170 mg of the solid component obtained in Example 1 (2) as the catalyst component (A), then, the mixture was put into the above-mentioned autoclave, and polymerization was conducted at 40°C. During the polymerization, propylene was fed continuously while maintaining the total pressure at 0.6 MPa. After 1 hour, 10 ml of isobutanol was added to terminate the polymerization, then, the unreacted monomer was purged. The produced polymer was dried at 60°C for 5 hours under reduced pressure, to obtain 14.5 g of a polypropylene powder.

Therefore, the yield of polypropylene per 1 mol of a transition metal compound and 1 hour of polymerization (hereinafter, abbreviated as g-PP/mol-Zr · hr) was $6.0\times10^6$ (= g-PP/mol-Zr · hr), and the stereoregularity of the resulted propylene polymer was 0.872% (= mmmm%). The polymerization results were shown in Table 2. Polymer particles having small σg value and uniform particle size were obtained.

Example 6

(1) Contact treatment of particle (a) with organometallic compound(b)

Contact treatment was conducted in the same manner as in Example 1 (1) except that the heat-treated silica was changed to 382 g of silica (manufactured by Devison, #948) having an average particle size of 64.0 μm, a geometric standard deviation based on volume of particle size of 1.43, a micro pore volume of 1.62 ml/g and a specific surface area of 312 $m^2/g$, and the amount of the solution of trimethylaluminum in toluene of which concentration had been controlled to 2 mmol/ml was changed to 382 ml.

(2) Compound (c) treatment

After the above-mentioned treatment (1), 3.3 liter of toluene was added to give a slurry, which was cooled to 5°C using an ice water, then, to this was added gradually 420 ml of a solution of pentafluorophenol in toluene of which concentration had been controlled to 2 mmol/ml. In this case, generation of a gas was observed. The mixture was stirred at 5°C for 30 minutes and at 80°C for 2 hours, then, the supernatant was filtrated, and the remaining solid components were washed four times with 3.3 liter of toluene at 80°C, further, washed twice with 3.3 liter of hexane at room temperature. Thereafter, the solid component was dried under reduced pressure, to obtain 434 g of a flowable solid component.

(3) Propylene polymerization

Into a nitrogen-purged autoclave having an internal volume of 0.1 liter containing a stirring rod, 0.9 ml of a solution of triisobutylaluminum in toluene of which concentration had been controlled to 1 mmol/ml as the catalyst component (C), 1 ml of a solution of ethylenebis(indenyl)zirconium dichloride in toluene of which concentration had been controlled to 2 μmol/ml as the catalyst component (B), and 27 mg of the solid component obtained in the (2) described above as the catalyst component (A) were charged, and 40 g of propylene was further charged, then, the

mixture was heated to 40°C. 1 hour after, the unreacted monomer was purged. A polymer produced was dried at 60°C for 2 hours under reduced pressure, to obtain 7.0 g of a polypropylene powder.

The polymerization results were shown in Table 2. Polymer particles having small σ g value and uniform particle size were obtained.

Comparative Example 2

(1) Propylene polymerization

1 liter of toluene was charged in an argon-purged stainless autoclave having an internal volume of 3 liter equipped with a stirrer after drying under reduced pressure, then, 100 g of propylene was charged, then, the mixture was heated to 40°C. Thereafter, 1.4 ml of a solution of triisobutylaluminum in toluene of which concentration had been controlled to 1 mmol/ml as the catalyst component (C) was allowed to contact with 0.7 ml of a solution of ethylenebis (indenyl)zirconium dichloride in toluene of which concentration had been controlled to 2 μmol/ml as the catalyst component (B) in another stainless vessel, then, the mixture was put into the above-mentioned autoclave, and a solution obtained by dissolving 1.25 g of triphenylmethyltetrakis(pentafluorophenyl)borate in 1.25 ml of toluene was further put into the above-mentioned autoclave, and polymerization was conducted at 40°C. During the polymerization, propylene was fed continuously while maintaining the total pressure at 0.6 MPa. After 1 hour, 20 ml of isobutanol was added to terminate the polymerization, then, the unreacted monomer was purged. A polymer produced was dried at 60°C for 5 hours under reduced pressure, to obtain 94.3 g of a polypropylene powder. The polymerization results were shown in Table 2. Polymer particles had large σ g value and contained a large amount of a fine powder.

Table 2

| | Polymerization activity (g-PP/mol-Zr · hr) | mmmm% | Mw | Mw/Mn | óg |
|---|---|---|---|---|---|
| Example 5 | $6.0 \times 10^6$ | 0.872 | 32,500 | 2.2 | 1.43 |
| Example 6 | $3.5 \times 10^6$ | 0.861 | 26,700 | 2.5 | 1.56 |
| Comparative Example 2 | $6.9 \times 10^7$ | 0.897 | 50,700 | 1.7 | 2.79 |

Example 7

(1) Contact treatment of particle (a) with organometallic compound (b)

Contact treatment was conducted in the same manner as in Example 1 (1) except that the heat-treated silica was changed to 382 g of silica (manufactured by Devison, #948) having an average particle size of 64.0 μm, a geometric standard deviation based on volume of particle size of 1.43, a micro pore volume of 1.62 ml/g and a specific surface area of 312 $m^2$/g, and the amount of the solution of trimethylaluminum in toluene of which concentration had been controlled to 2 mmol/ml was changed to 382 ml.

(2) Compound (c) treatment

After the above-mentioned treatment (1), 3.3 liter of toluene was added to give a slurry, which was cooled to 5°C using an ice water, then, to this was added gradually 413 ml of a solution of pentafluorophenol in toluene of which concentration had been controlled to 2 mmol/ml. In this case, generation of a gas was observed. The mixture was stirred at 5°C for 30 minutes and at 80°C for 2 hours, then, the supernatant was filtrated, and the remaining solid components were washed four times with 3.3 liter of toluene at 80°C, further, washed twice with 3.3 liter of hexane at room temperature. Thereafter, the solid component was dried under reduced pressure, to obtain 475 g of a flowable solid component.

(3) Propylene polymerization

280 g of propylene was charged in an argon-purged autoclave having an internal volume of 1 liter equipped with a stirrer after drying under reduced pressure, then, the content was heated to 40°C. Then, 1 ml of a solution of triisobutylaluminum in toluene of which concentration had been controlled to 1 mmol/ml was added. Then, 5 ml of a solution of bis(2-phenylindenyl)zirconium dichloride in toluene of which concentration had been controlled to 2 μmol/ ml was added, subsequently 303 mg of the solid component obtained in the (2) described above was added as the solid catalyst component, and polymerization was conducted at 40°C for 60 minutes. 2.9 g of a propylene polymer was

obtained. The resulted propylene polymer was a polymer particle having uniform particle size in which the melting point was 148.2°C, [ η ]=1.48 dl/g, Mw/Mn=2.6, and mmmm%=49.5%.

Comparative Example 3

(1) Propylene polymerization

280 g of propylene was charged in an argon-purged autoclave having an internal volume of 1 liter equipped with a stirrer after drying under reduced pressure, then, the content was heated to 40°C. Then, 10 mmol (in terms of Al atom) of methylaluminoxane (MMAO-3A, toluene solution, Al concentration 5.6 wt%; manufactured by Tohso-Akzo company, Ltd.) was added. Then, 5 ml of a solution of bis(2-phenylindenyl)zirconium dichloride in toluene of which concentration had been controlled to 2 μmol/ml was added, and polymerization was conducted at 40°C for 60 minutes. 68 g of a propylene polymer was obtained. The obtained propylene polymer had a melting point of 144.1°C, [ η ] of 1.60 dl/g, Mw/Mn of 276, and mmmm% of 32.0, and was obtained in the form of an agglomerate because of coagulation thereof.

**INDUSTRIAL APPLICABILITY**

According to the present invention, a more efficient process for producing an α -olefin polymer using a single-site catalyst is provided. Further, a process for producing an α-olefin polymer having a high stereoregularity and a stereo block polypropylene having a high isotactic pentad fraction is provided. Particularly, when applied to polymerization accompanying formation of polymer particles (for example, slurry polymerization, gas phase polymerization and the like), a process for efficiently producing a stereoregular α-olefin polymer having uniform polymer particle size is provided.

**Claims**

1. A catalyst for stereoregular polymerization of α -olefins obtained by a process comprising contacting modified particles (A) obtained by contacting dried particles (a) with an organometallic compound (b), then with a compound (c) having a functional group containing an active hydrogen or non-proton donative Lewis basic functional group, and an electron withdrawing group, with a transition metal compound (B) having an α-olefin stereoregular polymerization ability and an organometallic compound (C).

2. The catalyst for stereoregular polymerization of α-olefins according to claim 1, wherein the compound (c) having a functional group containing an active hydrogen or non-proton donative Lewis basic functional group, and an electron withdrawing group is a compound represented by the general formula (2) below:

$$R^{b}{}_{m}ZH_{z-m} \qquad (2)$$

(wherein, in the formula, $R^b$ represents an electron with drawing group or a group containing an electron withdrawing group; Z represents an atom of the 15th or 16th Group of the Periodic Table; H represents a hydrogen atom; and z represents a valence of Z, provided m is 1 when z is 2 and m is 1 or 2 when z is 3).

3. The catalyst for stereoregular polymerization of α-olefins according to claim 1, wherein the transition metal compound (B) is a member selected from the group consisting of transition metal compounds represented by the general formulas (I) and (III) below:

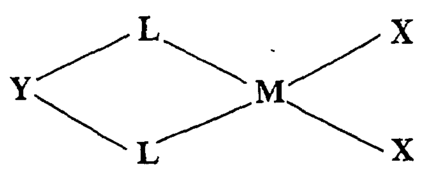

(I)

,

and

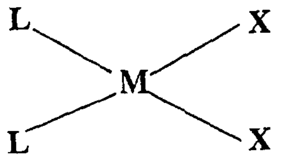

(III)

(wherein, M represents a transition metal atom of group IV in the periodic table of element; L represents a substituted $\eta^5$-cyclopentadienyl group, $\eta^5$-indenyl group or substituted $\eta^5$-indenyl group, and two Ls may be the same or different; Y represents a bridging group linking two Ls; and each of two Xs independently represents a hydrogen atom, halogen atom, alkyl group, aralkyl group, aryl group, substituted silyl group, alkoxy group, aralkyloxy group, aryloxy group or heterocyclic group.).

**4.** The catalyst for stereoregular polymerization of $\alpha$-olefins according to claim 1, wherein the transition metal compound (B) is a member selected from the group consisting of transition metal compounds represented by the general formulas (I) and (III) below:

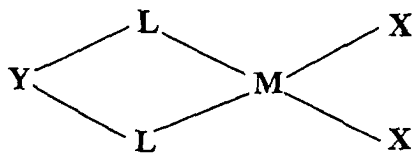

(I)

(wherein, M represents a transition metal atom of group IV in the periodic table of element; L represents a substituted $\eta^5$-cyclopentadienyl group, $\eta^5$-indenyl group or substituted $\eta^5$-indenyl group, and two Ls may be the same or different; Y represents a bridging group linking two Ls; and each of two Xs independently represents a hydrogen atom, halogen atom, alkyl group, aralkyl group, aryl group, substituted silyl group, alkoxy group, aralkyloxy group, aryloxy group or heterocyclic group.), and

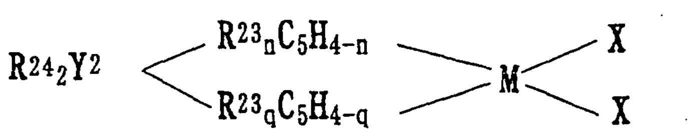

(IV)

(in the above-mentioned general formula (IV), ($R^{23}_n$-$C_5H_{4-n}$) and ($R^{23}_q$-$C_5H_{4-q}$) are substituted $\eta^5$-cyclopentadienyl groups respectively, n and q represent an integer from 1 to 3. $R^{23}$s may be the same or different, and each represents a halogen atom, alkyl group, aralkyl group, aryl group, substituted silyl group, alkoxy group, aralkyloxy group, aryloxy group or heterocyclic group, and the positions and/or kinds of $R^{23}$s in the substituted $\eta^5$-cyclopentadienyl groups are so selected that a symmetrical surface including M does not exist. Each of $R^{24}$ and X represents a hydrogen atom, halogen atom, alkyl group, aralkyl group, aryl group, substituted silyl group, alkoxy group, aralkyloxy group, aryloxy group or heterocyclic group. $R^{24}$ and X may be completely the same or different mutually. $Y^2$ represents a carbon atom, silicon atom, germanium atom or tin atom.).

**5.** The catalyst for stereoregular polymerization of $\alpha$-olefins according to claim 1, wherein the transition metal compound (B) is a transition metal compound represented by the general formula below:

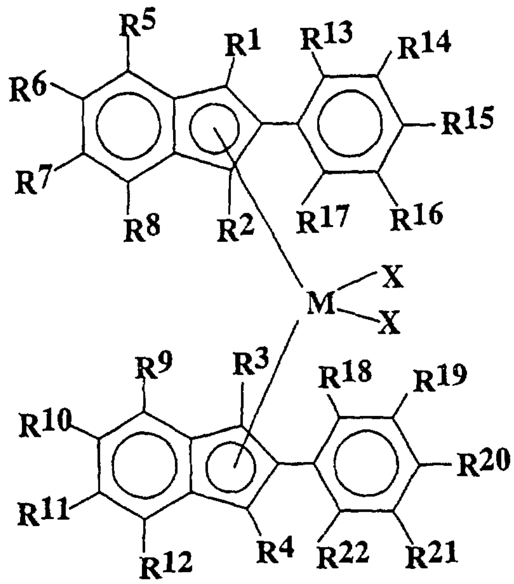

(II)

(wherein, each of $R^1$ to $R^{22}$ independently represents a hydrogen atom, halogen atom, alkyl group, aryl group, aralkyl group or substituted silyl group, and $R^1$ to $R^{22}$ may be the same or different, and any adjacent two moieties of $R^1$ to $R^{22}$ on the same ring may form a ring having 5 to 8 carbon atoms. M represents a transition metal atom of group IV in the periodic table of element, and X represents a hydrogen atom, halogen atom, alkyl group, aryl group, aralkyl group or alkoxy group, and two Xs may be the same or different.).

**6.** A process for producing a stereoregular α-olefin polymer which comprises polymerizing an α-olefin with the catalyst for stereoregular polymerization of α-olefins of any one of claims 1 to 5.

**7.** A process for producing a stereoregular α-olefin polymer which comprises contacting modified particles (A) obtained by contacting dried particles (a) with an organometallic compound (b), then with a compound (c) having a functional group containing an active hydrogen or non-proton donative Lewis basic functional group, and an electron withdrawing group, with a transition metal compound (B) having an α-olefin stereoregular polymerization ability and an organometallic compound (C) and polymerizing an α-olefin.

**8.** The process for producing a stereoregular α-olefin polymer according to claim 7, wherein the compound (c) having a functional group containing an active hydrogen or non-proton donative Lewis basic functional group, and an electron withdrawing group is a compound represented by the general formula (2) below:

$$R^b{}_mZH_{z-m} \qquad (2)$$

(wherein, in the formula, $R^b$ represents an electron withdrawing group or a group containing an electron withdrawing group; Z represents an atom of the 15th or 16th Group of the Periodic Table; H represents a hydrogen atom; and z represents a valence of Z, provided m is 1 when z is 2 and m is 1 or 2 when z is 3).

**9.** The process for producing a stereoregular α-olefin polymer according to claim 7, wherein the transition metal compound (B) is a member selected from the group consisting of transition metal compounds represented by the general formulas (I) and (III) below:

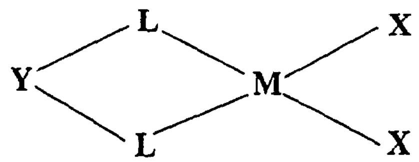

(I)

and

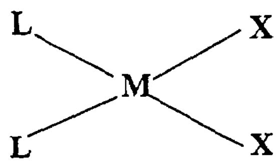

(III)

(wherein, M represents a transition metal atom of group IV in the periodic table of element; L represents a substituted $\eta^5$-cyclopentadienyl group, $\eta^5$-indenyl group or substituted $\eta^5$-indenyl group, and two Ls may be the same or different; Y represents a bridging group linking two Ls; and each of two Xs independently represents a hydrogen atom, halogen atom, alkyl group, aralkyl group, aryl group, substituted silyl group, alkoxy group, aralkyloxy group, aryloxy group or heterocyclic group.).

**10.** The process for producing a stereoregular $\alpha$-olefin polymer according to claim 7, wherein the transition metal compound (B) is a member selected from the group consisting of transition metal compounds represented by the general formulas (I) and (III) below:

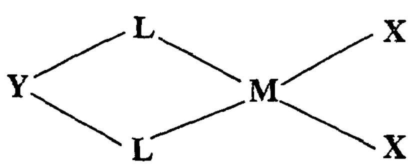

(I)

(wherein, M represents a transition metal atom of group IV in the periodic table of element; L represents a substituted $\eta^5$-cyclopentadienyl group, $\eta^5$-indenyl group or substituted $\eta^5$-indenyl group, and two Ls may be the same or different; Y represents a bridging group linking two Ls; and each of two Xs independently represents a hydrogen atom, halogen atom, alkyl group, aralkyl group, aryl group, substituted silyl group, alkoxy group, aralkyloxy group, aryloxy group or heterocyclic group.), and

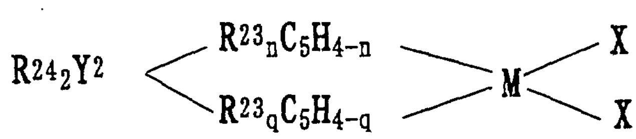

(IV)

(in the above-mentioned general formula (IV), ($R^{23}_n$-$C_5H_{4-n}$) and ($R^{23}_q$-$C_5H_{4-q}$) are substituted $\eta^5$-cyclopentadienyl groups respectively, n and q represent an integer from 1 to 3. $R^{23}$s may be the same or different, and each represents a halogen atom, alkyl group, aralkyl group, aryl group, substitutedsilyl group, alkoxy group, aralkyloxy group, aryloxy group or heterocyclic group, and the positions and/or kinds of $R^{23}$s in the substituted $\eta^5$-cyclopentadienyl groups are so selected that a symmetrical surface including M does not exist. Each of $R^{24}$ and X represents a hydrogen atom, halogen atom, alkyl group, aralkyl group, aryl group, substituted silyl group, alkoxy group, aralkyloxy group, aryloxy group or heterocyclic group. $R^{24}$ and X may be completely the same or different mutually. $Y^2$ represents a carbon atom, silicon atom, germanium atom or tin atom.).

**11.** The process for producing a stereoregular α-olefin polymer according to claim 7, wherein the wherein the transition metal compound (B) is a transition metal compound represented by the general formula below:

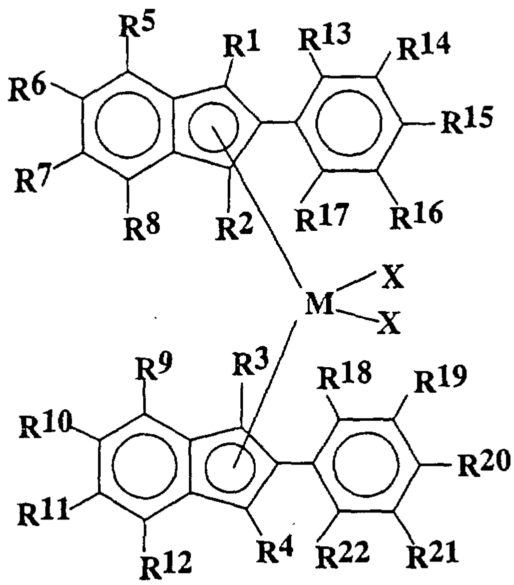

(II)

(wherein, each of $R^1$ to $R^{22}$ independently represents a hydrogen atom, halogen atom, alkyl group, aryl group, aralkyl group or substituted silyl group, and $R^1$ to $R^{22}$ may be the same or different, and any adjacent two moieties of $R^1$ to $R^{22}$ on the same ring may form a ring having 5 to 8 carbon atoms. M represents a transition metal atom of group IV in the periodic table of element, and X represents a hydrogen atom, halogen atom, alkyl group, aryl group, aralkyl group or alkoxy group, and two Xs may be the same or different.).

**12.** The process for producing a stereoregular α-olefin polymer according to any one of claims 7 to 11, wherein the α-olefin is propylene.

**13.** The process for producing a stereoregular α -olefin polymer according to claims 6, wherein the α-olefin is propylene.

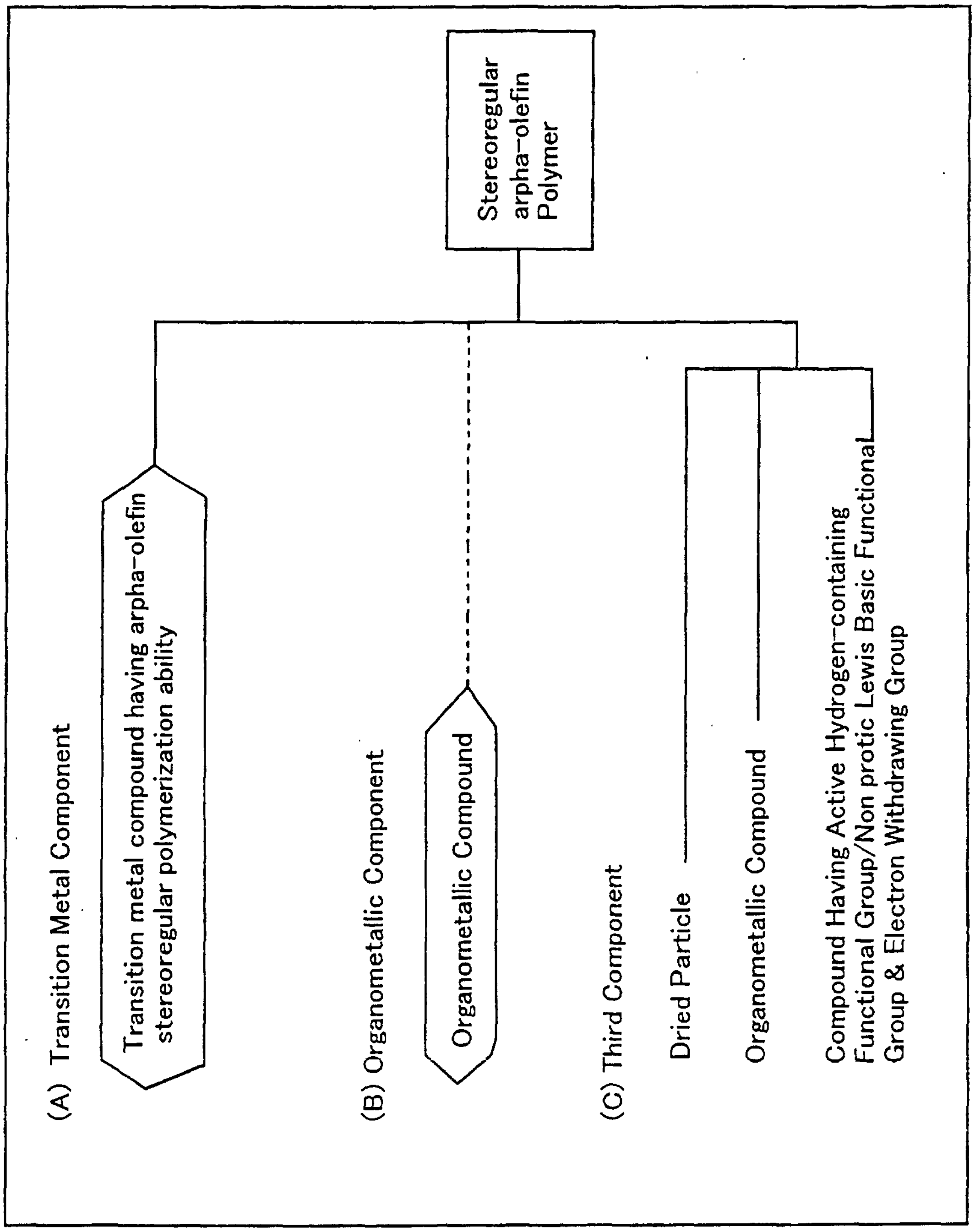
Stereoregular arpha-olefin Polymer
(A) Transition Metal Component
Transition metal compound having arpha-olefin stereoregular polymerization ability
(B) Organometallic Component
Organometallic Compound
(C) Third Component
Dried Particle
Organometallic Compound
Compound Having Active Hydrogen-containing Functional Group/Non protic Lewis Basic Functional Group & Electron Withdrawing Group

Fig 1

## INTERNATIONAL SEARCH REPORT

International application No.
PCT/JP00/06591

A. CLASSIFICATION OF SUBJECT MATTER
Int. Cl$^7$ C08F 4/64, C08F 10/00

According to International Patent Classification (IPC) or to both national classification and IPC

B. FIELDS SEARCHED

Minimum documentation searched (classification system followed by classification symbols)
Int.Cl$^7$ C08F 4/60-4/70

Documentation searched other than minimum documentation to the extent that such documents are included in the fields searched
Jitsuyo Shinan Koho 1926-1996 Jitsuyo Shinan Toroku Koho 1996-2000
Kokai Jitsuyo Shinan Koho 1971-2000 Toroku Jitsuyo Shinan Koho 1994-2000

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X<br><br><br>Y | JP, 11-193306, A (Sumitomo Chemical Company, Limited), 21 July, 1999 (21.07.99), Claims; Par. Nos. 0070, 0076<br>& WO, 99/10389, A1 & EP, 949273, A1 & CN, 1242779, A | 1-4,6-10, 12,13<br><br>5,11 |
| X<br><br><br>Y | JP, 9-249707, A (Sumitomo Chemical Company, Limited), 22 September, 1997 (22.09.97), Claims; Par. Nos. 0032, 0042<br>& DE, 19711304, A1 & KR, 97065563, A & US, 6100213, A | 1-4,6-10, 12,13<br><br>5,11 |
| X<br><br>Y | EP, 821009, A1 (DAELIM INDUSTRIAL CO., LTD.), 28 January, 1998 (28.01.98),<br>Claims; page 4, lines 29 to 54, (especially, compound in formula(2)),page 5, lines 8 to 10; examples 1, 3 & JP, 10-114805, A & KR, 98009292, A | 1-4,6<br><br>5 |
| Y | US, 5594080, A (Robert M. Waymouth et al.), 14 January, 1997 (14.01.97), Claims; abstract & WO, 95/25757, A1 & AU, 9521911, A | 5,11 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 November, 2000 (10.11.00) | 21 November, 2000 (21.11.00) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP00/06591

C (Continuation). DOCUMENTS CONSIDERED TO BE RELEVANT

| Category* | Citation of document, with indication, where appropriate, of the relevant passages | Relevant to claim No. |
|---|---|---|
| | & EP, 802935, A1 & JP, 9-510745, A<br>& KR, 97702301, A | |
| A | JP, 11-269213, A (Sumitomo Chemical Company, Limited),<br>05 October, 1999 (05.10.99),<br>Claims (Family: none) | 1-13 |
| A | EP, 208524, A1 (TOA NENRYO KOGYO KABUSHIKI KAISHA),<br>14 January, 1987 (14.01.87),<br>Claims<br>& JP, 62-7706, A & AU, 8659751, A<br>& US, 4693990, A & CA, 1288758, C | 1-13 |

Form PCT/ISA/210 (continuation of second sheet) (July 1992)